(19) **Europäisches Patentamt / European Patent Office / Office européen des brevets**

(11) **EP 4 336 922 A1**

(12) **EUROPEAN PATENT APPLICATION**
published in accordance with Art. 153(4) EPC

(43) Date of publication:
**13.03.2024 Bulletin 2024/11**

(21) Application number: **22799125.4**

(22) Date of filing: **04.05.2022**

(51) International Patent Classification (IPC):
*H04W 72/02* (2009.01)  *H04W 72/04* (2023.01)
*H04W 72/08* (2009.01)  *H04W 72/12* (2023.01)
*H04L 1/18* (2023.01)  *H04W 4/40* (2018.01)
*H04W 92/18* (2009.01)

(52) Cooperative Patent Classification (CPC):
**H04W 74/002; H04L 1/18; H04L 5/0048;**
**H04L 5/0094; H04W 4/40; H04W 92/18;**
H04W 72/54

(86) International application number:
**PCT/KR2022/006420**

(87) International publication number:
**WO 2022/235082 (10.11.2022 Gazette 2022/45)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: 04.05.2021  KR 20210058023
22.07.2021  KR 20210096115
03.08.2021  KR 20210102092
17.09.2021  KR 20210125156
27.09.2021  KR 20210127366
20.12.2021  KR 20210182976

(71) Applicant: **LG Electronics Inc.**
**Seoul 07336 (KR)**

(72) Inventors:
• **HWANG, Daesung**
**Seoul 06772 (KR)**
• **LEE, Seungmin**
**Seoul 06772 (KR)**
• **SEO, Hanbyul**
**Seoul 06772 (KR)**

(74) Representative: **Plasseraud IP**
**66, rue de la Chaussée d'Antin**
**75440 Paris Cedex 09 (FR)**

(54) **METHOD AND APPARATUS FOR DETERMINING NON-PREFERRED RESOURCE IN WIRELESS COMMUNICATION SYSTEM**

(57)    A method of a first user equipment (UE) for determining a non-preferred resource in a wireless communication system comprises receiving, from a third UE, a DeModulation Reference Signal for a Physical Sidelink Control Channel (PSCCH DMRS), receiving the PSCCH from the third UE, receiving, from the third UE, a DeModulation Reference Signal for a Physical Sidelink Shared channel (PSSCH DMRS), determining a non-preferred resource related to transmission of a second UE based on a measurement for at least one of the PSCCH DMRS and/or the PSSCH DMRS, and transmitting, to the second UE, coordination information representing the non-preferred resource.

【FIG. 13】

- Start
- Receive PSCCH DMRS — S1310
- Receive PSCCH — S1320
- Receive PSSCH DMRS — S1330
- Determine non-preferred resource — S1340
- End

EP 4 336 922 A1

**Description**

[TECHNICAL FIELD]

The present disclosure relates to a method and device of determining a non-preferred resource in a wireless communication system.

[BACKGROUND]

A wireless communication system is a multiple access system that supports communication of multiple users by sharing available system resources (e.g., a bandwidth, transmission power, etc.) among them. Examples of multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, a Single Carrier Frequency Division Multiple Access (SC-FDMA) system, and a Multi-Carrier Frequency Division Multiple Access (MC-FDMA) system.

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic.

Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

As a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

Regarding an inter-UE coordination mechanism, two schemes may be considered. In scheme 1, a UE-A may provide a UE-B with a set of resources that can be used for a resource (re)selection procedure of the UE-B. In scheme 2, a UE-A may provide a UE-B with resource collision related information for resources indicated by sidelink control information (SCI) of the UE-B. The UE-B may avoid a resource collision by reselecting some of the resources indicated by the SCI of the UE-B.

A resource set which may be used for a resource (re)selection procedure of the UE-B in relation to the scheme 1 may include a preferred source and/or a non-preferred resource. The UE-A may determine the preferred resource or the non-preferred resource by using a sensing result thereof.

[Disclosure]

[Technical Problem]

The following conditions may be considered when determining a non-preferred resource related to the scheme 1. When the non-preferred resource is determined without a pre-defined criterion, the non-preferred resource may be difficult to utilize as inter-UE coordination information for improving a resource (re)selection procedure of a UE-B. For example, the corresponding non-preferred resource may be one of resources considered by the UE-B for the resource (re)selection procedure (even if there is no instruction from a UE-A). In this case, a degree of improvement of the resource (re)selection procedure of the UE-B may be relatively low, compared to power and resources required for operation and related signaling operation for determining the non-preferred resource.

In order to solve the above problems, an object of the present disclosure is to provide a method for determining a non-preferred resource with effectiveness as inter-UE coordination information.

Objects of the present disclosure are not limited to the foregoing, and other unmentioned objects would be apparent to one of ordinary skill in the art from the following description.

[Technical Solution]

In one aspect of the present disclosure, there is provided a method of a first user equipment (UE) for determining a non-preferred resource in a wireless communication system, the method comprising receiving, from a third UE, a DeModulation Reference Signal for a Physical Sidelink Control Channel (PSCCH DMRS), receiving the PSCCH from the third UE, receiving, from the third UE, a DeModulation Reference Signal for a Physical Sidelink Shared channel (PSSCH DMRS), determining a non-preferred resource related to transmission of a second UE based on a measurement for at least one of the PSCCH DMRS and/or the PSSCH DMRS, and transmitting, to the second UE, coordination information representing the non-preferred resource.

The coordination information is transmitted via a Physical Sidelink Shared channel (PSSCH). One or more resources are determined based on Sidelink Control Information (SCI) related to the PSCCH. The one or more resources are determined as the non-preferred resource based on i) a reference signal received power (RSRP) based on the measurement and ii) one or more RSRP thresholds.

The one or more RSRP thresholds may include a first RSRP threshold and a second RSRP threshold.

Based on the first UE being a receiving UE related to the one or more resources, the one or more resources may be determined as the non-preferred resource based on the RSRP and the second RSRP threshold.

Based on the RSRP being lower than the second RSRP threshold, the one or more resources may be determined as the non-preferred resource.

Based on the first UE being different from the receiving UE, the one or more resources may be determined as the non-preferred resource based on the RSRP and the first RSRP threshold.

Based on the RSRP being higher than the first RSRP threshold, the one or more resources may be determined as the non-preferred resource.

Information for RSRP threshold for determining the non-preferred resource may be pre-configured or configured by a base station.

The first RSRP threshold or the second RSRP threshold may be determined based on a value of a priority field included in the SCI.

The transmission of the coordination information may be triggered based on i) a predefined condition or ii) a request related to the coordination information.

The coordination information may be based on a second stage SCI or a Medium Access Control-Control Element (MAC-CE).

The SCI may be received prior to a predefined time point, and the predefined time point may be determined based on a transmission time point of the coordination information and a processing time of the first UE.

In another aspect of the present disclosure, there is provided a first user equipment (UE) determining a non-preferred resource in a wireless communication system, the first UE comprising one or more transceivers, one or more processors configured to control the one or more transceivers, and one or more memories operably connected to the one or more processors.

The one or more memories are configured to store instructions performing operations based on being executed by the one or more processors.

The operations comprise receiving, from a third UE, a DeModulation Reference Signal for a Physical Sidelink Control Channel (PSCCH DMRS), receiving, from the third UE, the PSCCH, receiving, from the third UE, a DeModulation Reference Signal for a Physical Sidelink Shared channel (PSSCH DMRS), determining a non-preferred resource related to transmission of a second UE based on a measurement for at least one of the PSCCH DMRS and/or the PSSCH DMRS, and transmitting, to the second UE, coordination information representing the non-preferred resource.

The coordination information is transmitted via a Physical Sidelink Shared channel (PSSCH). One or more resources are determined based on Sidelink Control Information (SCI) related to the PSCCH. The one or more resources are determined as the non-preferred resource based on i) a reference signal received power (RSRP) based on the measurement and ii) one or more RSRP thresholds.

In another aspect of the present disclosure, there is provided a device controlling a first user equipment (UE) to determine a non-preferred resource in a wireless communication system, the device comprising one or more processors, and one or more memories operably connected to the one or more processors.

The one or more memories are configured to store instructions performing operations based on being executed by the one or more processors.

The operations comprise receiving, from a third UE, a DeModulation Reference Signal for a Physical Sidelink Control Channel (PSCCH DMRS), receiving, from the third UE, the PSCCH, receiving, from the third UE, a DeModulation Reference Signal for a Physical Sidelink Shared channel (PSSCH DMRS), determining a non-preferred resource related to transmission of a second UE based on a measurement for at least one of the PSCCH DMRS and/or the PSSCH DMRS, and transmitting, to the second UE, coordination information representing the non-preferred resource.

The coordination information is transmitted via a Physical Sidelink Shared channel (PSSCH). One or more resources are determined based on Sidelink Control Information (SCI) related to the PSCCH. The one or more resources are determined as the non-preferred resource based on i) a reference signal received power (RSRP) based on the measurement and ii) one or more RSRP thresholds.

In another aspect of the present disclosure, there is provided one or more non-transitory computer readable mediums storing one or more instructions.

The one or more instructions perform operations based on being executed by one or more processors.

The operations comprise receiving, from a third UE, a DeModulation Reference Signal for a Physical Sidelink Control Channel (PSCCH DMRS), receiving, from the third UE, the PSCCH, receiving, from the third UE, a DeModulation Reference Signal for a Physical Sidelink Shared channel (PSSCH DMRS), determining a non-preferred resource related to transmission of a second UE based on a measurement for at least one of the PSCCH DMRS and/or the PSSCH DMRS, and transmitting, to the second UE, coordination information representing the non-preferred resource.

The coordination information is transmitted via a Physical Sidelink Shared channel (PSSCH). One or more resources are determined based on Sidelink Control Information (SCI) related to the PSCCH. The one or more resources are determined as the non-preferred resource based on i) a reference signal received power (RSRP) based on the measurement and ii) one or more RSRP thresholds.

In another aspect of the present disclosure, there is provided a method of a second user equipment (UE) for receiving coordination information in a wireless communication system, the method comprising receiving, from a first UE, the coordination information.

The coordination information represents a non-preferred resource related to transmission of the second UE.

The non-preferred resource is determined based on a measurement for at least one of a DeModulation Reference Signal for a Physical Sidelink Control Channel (PSCCH DMRS) and/or a DeModulation Reference Signal for a Physical Sidelink Shared channel (PSSCH DMRS).

The PSCCH DMRS and the PSSCH DMRS are transmitted from a third UE to the first UE, and one or more resources are determined based on Sidelink Control Information (SCI) related to the Physical Sidelink Control Channel (PSCCH). The one or more resources are determined as the non-preferred resource based on i) a reference signal received power (RSRP) based on the measurement and ii) one or more RSRP thresholds.

The coordination information may be received via a Physical Sidelink Shared channel (PSSCH).

The coordination information may be based on a second stage SCI or a Medium Access Control-Control Element (MAC-CE).

In another aspect of the present disclosure, there is provided a second user equipment (UE) receiving coordination information in a wireless communication system, the second UE comprising one or more transceivers, one or more processors configured to control the one or more transceivers, and one or more memories operably connected to the one or more processors.

The one or more memories are configured to store instructions performing operations based on being executed by the one or more processors.

The operations comprise receiving, from a first UE, the coordination information.

The coordination information represents a non-preferred resource related to transmission of the second UE.

The non-preferred resource is determined based on a measurement for at least one of a DeModulation Reference Signal for a Physical Sidelink Control Channel (PSCCH DMRS) and/or a DeModulation Reference Signal for a Physical Sidelink Shared channel (PSSCH DMRS).

The PSCCH DMRS and the PSSCH DMRS are transmitted from a third UE to the first UE, and one or more resources are determined based on Sidelink Control Information (SCI) related to the Physical Sidelink Control Channel (PSCCH). The one or more resources are determined as the non-preferred resource based on i) a reference signal received power (RSRP) based on the measurement and ii) one or more RSRP thresholds.

[Advantageous Effects]

According to embodiments of the present disclosure, based on a RSRP for at least one of the PSCCH DMRS and/or the PSSCH DMRS received from the third UE and one or more RSRP thresholds, a non-preferred resource related to transmission of the second UE is determined. Thus, based on one or more predefined thresholds, a non-preferred resource with effectiveness can be determined as coordination information for resource (re)selection of a UE-B.

Transmission in a resource in which interference to the transmission of the UE-B is expected to be large because the RSRP is greater than a predetermined value needs to be avoided. On the other hand, when the RSRP is less than a specific threshold, it is necessary to protect reception of the UE-A more than transmission of the UE-B. In other words, since transmission from the third UE (i.e., reception of the UE-A) may be more affected by interference (i.e., transmission of the UE-B), it is necessary to avoid the transmission of the UE-B. In this regard, according to embodiments of the present disclosure, the one or more thresholds may include a first RSRP threshold and a second RSRP threshold.

1) Based on a receiving UE related to one or more resources being the first UE, the second RSRP threshold can be used. Specifically, based on a RSRP measured in relation to the one or more resources being less than the second RSRP threshold, the one or more resources can be determined as the non-preferred resource. 2) Based on the receiving UE being different from the first UE, the first RSRP threshold can be used. Based on a RSRP measured in relation to the one or more resources being greater than the first RSRP threshold, the one or more resources can be determined as the non-preferred resource.

Since the criterion for determining the non-preferred resource is configured by distinguishing a case where the UE-A is a receiving UE and a case where the UE-A is not a receiving UE, reliability for both the transmission of the UE-B and the reception of the UE-A (i.e., transmission of UEs other than the UE-B) can be improved.

Effects of the present disclosure are not limited to the foregoing, and other unmentioned effects would be apparent to one of ordinary skill in the art from the following description.

[BRIEF DESCRIPTION OF THE DRAWINGS]

The accompanying drawings, which are included to provide a further understanding of the present disclosure and constitute a part of the detailed description, illustrate embodiments of the present disclosure and together with the description serve to explain the principle of the present disclosure.

FIG. 1 shows a structure of an NR system, based on an embodiment of the present disclosure.
FIG. 2 shows a structure of a radio frame of an NR, based on an embodiment of the present disclosure.
FIG. 3 shows a structure of a slot of an NR frame, based on an embodiment of the present disclosure.
FIG. 4 shows a UE performing V2X or SL communication based on an embodiment of the present disclosure.
FIG. 5 shows a resource unit for V2X or SL communication based on an embodiment of the present disclosure.
FIG. 6 shows a procedure of performing V2X or SL communication by a UE based on a transmission mode, based on an embodiment of the present disclosure.
FIG. 7 shows three cast type based on an embodiment of the present disclosure.
FIG. 8 shows a plurality of BWPs based on an embodiment of the present disclosure.
FIG. 9 shows a BWP based on an embodiment of the present disclosure.
FIG. 10 shows a resource unit for CBR measurement based on an embodiment of the present disclosure.
FIG. 11 illustrates a resource pool related to CBR measurement.
FIG. 12 illustrates a procedure in which a UE-A transmits assistance information to a UE-B based on an embodiment of the present disclosure.
FIG. 13 is a flow chart illustrating a method for a first UE to determine a non-preferred resource in a wireless communication system according to an embodiment of the present disclosure.
FIG. 14 is a flow chart illustrating a method for a second UE to receive coordination information in a wireless communication system according to another embodiment of the present disclosure.
FIG. 15 shows a communication system 1 based on an embodiment of the present disclosure.
FIG. 16 shows wireless devices based on an embodiment of the present disclosure.
FIG. 17 shows a signal process circuit for a transmission signal based on an embodiment of the present disclosure.
FIG. 18 shows another example of a wireless device based on an embodiment of the present disclosure.
FIG. 19 shows a hand-held device based on an embodiment of the present disclosure
FIG. 20 shows a vehicle or an autonomous vehicle based on an embodiment of the present disclosure.

[DETAILED DESCRIPTION]

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For clarity in the description, the following description will mostly focus on LTE-A or 5G NR. However, technical features according to an embodiment of the present disclosure will not be limited only to this.

For terms and techniques not specifically described among terms and techniques used in the present disclosure, reference may be made to a wireless communication standard document published before the present disclosure is filed. For example, the following document may be referred to.

| 3GPP LTE | 3GPP NR (e.g. 5G) |
|---|---|
| - 3GPP TS 36.211: Physical channels and modulation | - 3GPP TS 38.211: Physical channels and modulation |
| - 3GPP TS 36.212: Multiplexing and channel coding | - 3GPP TS 38.212: Multiplexing and channel coding |
| - 3GPP TS 36.213: Physical layer procedures | - 3GPP TS 38.213: Physical layer procedures for control |
| - 3GPP TS 36.214: Physical layer; Measurements | - 3GPP TS 38.214: Physical layer procedures for data |
| - 3GPP TS 36.300: Overall description | |
| - 3GPP TS 36.304: User Equipment (UE) procedures in idle mode | - 3GPP TS 38.215: Physical layer measurements |
| - 3GPP TS 36.314: Layer 2 - Measurements | - 3GPP TS 38.300: Overall description |
| - 3GPP TS 36.321: Medium Access Control (MAC) protocol | - 3GPP TS 38.304: User Equipment (UE) procedures in idle mode and in RRC inactive state |
| - 3GPP TS 36.322: Radio Link Control (RLC) protocol | - 3GPP TS 38.321: Medium Access Control |
| - 3GPP TS 36.323: Packet Data Convergence Protocol (PDCP) | (MAC) protocol |
| - 3GPP TS 36.331: Radio Resource Control (RRC) protocol | - 3GPP TS 38.322: Radio Link Control (RLC) protocol |
| | - 3GPP TS 38.323: Packet Data Convergence Protocol (PDCP) |
| | - 3GPP TS 38.331: Radio Resource Control (RRC) protocol |
| | - 3GPP TS 37.324: Service Data Adaptation Protocol (SDAP) |
| | - 3GPP TS 37.340: Multi-connectivity; Overall description |

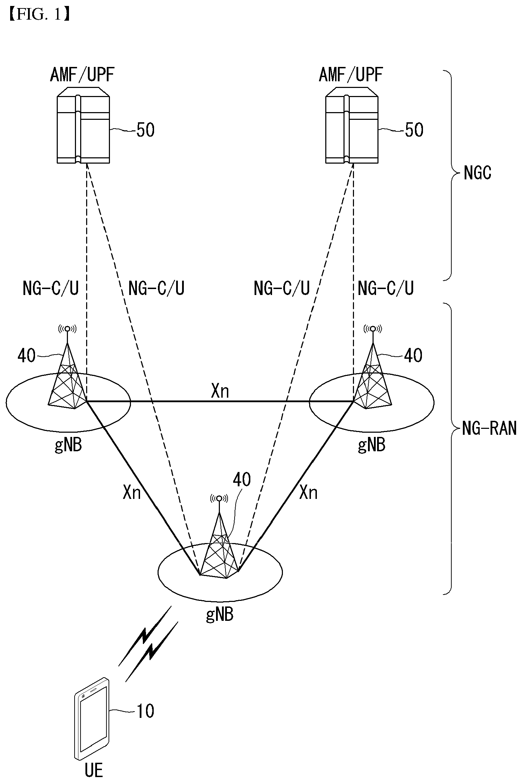

FIG. 1 shows a structure of an NR system, based on an embodiment of the present disclosure.

Referring to FIG. 1, a Next Generation - Radio Access Network (NG-RAN) may include a next generation-Node B (gNB) and/or eNB providing a user plane and control plane protocol termination to a user. FIG. 1 shows a case where the NG-RAN includes only the gNB. The gNB and the eNB are connected to one another via Xn interface. The gNB and the eNB are connected to one another via 5th Generation (5G) Core Network (5GC) and NG interface. More specifically, the gNB and the eNB are connected to an access and mobility management function (AMF) via NG-C interface, and the gNB and the eNB are connected to a user plane function (UPF) via NG-U interface.

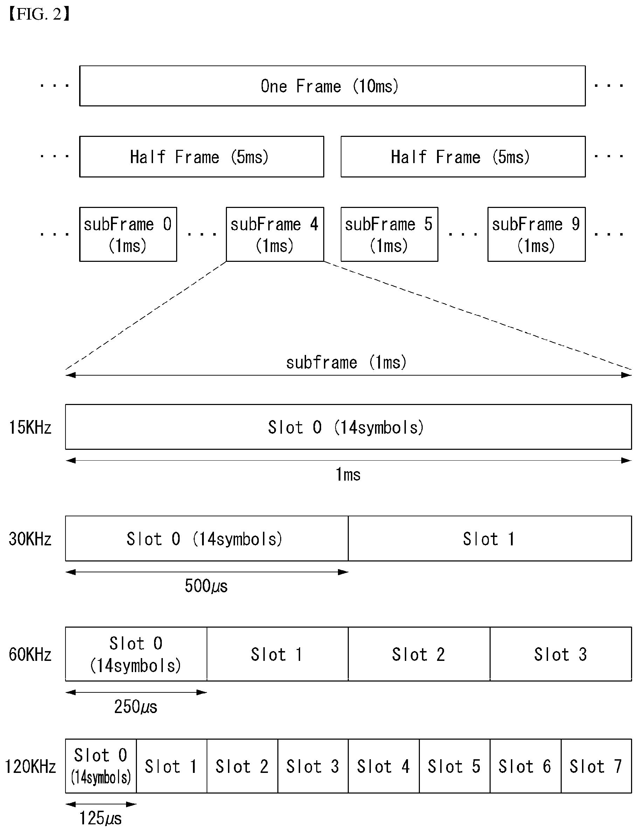

FIG. 2 shows a structure of a radio frame of an NR, based on an embodiment of the present disclosure.

Referring to FIG. 2, in the NR, a radio frame may be used for performing uplink and downlink transmission. A radio frame has a length of 10 ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols based on a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 1 shown below represents an example of a number of symbols per slot ($N^{slot}_{symb}$), a number slots per frame ($N^{frame,u}_{slot}$), and a number of slots per subframe ($N^{subframe,u}_{slot}$) based on an SCS configuration (u), in a case where a normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 shows an example of a number of symbols per slot, a number of slots per frame, and a number of slots per subframe based on the SCS, in a case where an extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15 kHz, a wide area of the conventional cellular bands may be supported, and, in case an SCS is 30 kHz/60 kHz a dense-urban, lower latency, wider carrier bandwidth may be supported. In case the SCS is 60 kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

[Table 3]

| Frequency Range Designation | Corresponding Frequency Range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410 MHz to 7125 MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

[Table 4]

| Frequency Range Designation | Corresponding Frequency Range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

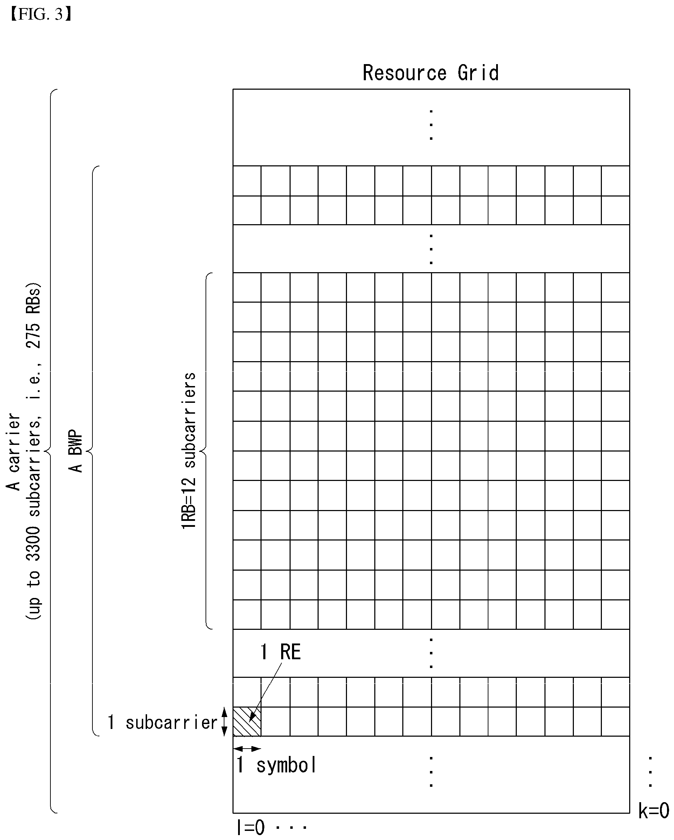

FIG. 3 shows a structure of a slot of an NR frame, based on an embodiment of the present disclosure.

Referring to FIG. 3, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

A radio interface between a UE and another UE or a radio interface between the UE and a network may consist of an L1 layer, an L2 layer, and an L3 layer. In various embodiments of the present disclosure, the L1 layer may imply a physical layer. In addition, for example, the L2 layer may imply at least one of a MAC layer, an RLC layer, a PDCP layer, and an SDAP layer. In addition, for example, the L3 layer may imply an RRC layer.

Sidelink synchronization signal (SLSS) and synchronization information

The SLSS may be an SL-specific sequence and include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and/or for synchronization acquisition. For example, the UE may use the S-PSS and the S-SSS for acquisition of fine synchronization and/or for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit CRC.

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

A plurality of numerologies having different SCSs and/or CP lengths may be supported in an NR SL system. In this case, a length of a time resource used by a transmitting UE to transmit the S-SSB may be decreased along with an increase in the SCS. Accordingly, coverage of the S-SSB may be decreased. Therefore, in order to ensure the coverage of the S-SSB, the transmitting UE may transmit one or more S-SSBs to a receiving UE within one S-SSB transmission period based on the SCS. For example, the number of S-SSBs transmitted by the transmitting UE to the receiving UE within one S-SSB transmission period may be pre-configured or configured to the transmitting UE. For example, an S-SSB transmission period may be 160 ms. For example, the S-SSB transmission period of 160 ms may be supported for all SCSs.

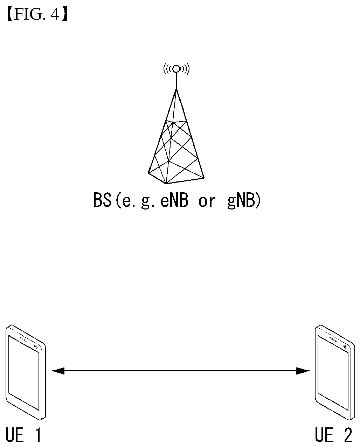

FIG. 4 shows a UE performing V2X or SL communication based on an embodiment of the present disclosure.

Referring to FIG. 4, in V2X or SL communication, the term 'UE' may generally imply a UE of a user. However, if a network equipment such as a BS transmits/receives a signal based on a communication scheme between UEs, the BS may also be regarded as a sort of the UE. For example, a UE 1 may be a first device 100, and a UE 2 may be a second device 200.

For example, the UE 1 may select a resource unit corresponding to a specific resource in a resource pool which implies a set of series of resources. In addition, the UE 1 may transmit an SL signal by using the resource unit. For example, the UE 2 which is a receiving UE may be allocated with a resource pool in which the UE 1 is capable of transmitting a signal, and may detect a signal of the UE 1 in the resource pool.

Herein, if the UE 1 is within a coverage of the BS, the BS may inform the UE 1 of the resource pool. Otherwise, if the UE 1 is out of the coverage of the BS, another UE may inform the UE 1 of the resource pool, or the UE 1 may use a pre-configured resource pool.

In general, the resource pool may be configured based on a plurality of resource units, and each UE may select at least one resource unit for SL signal transmission.

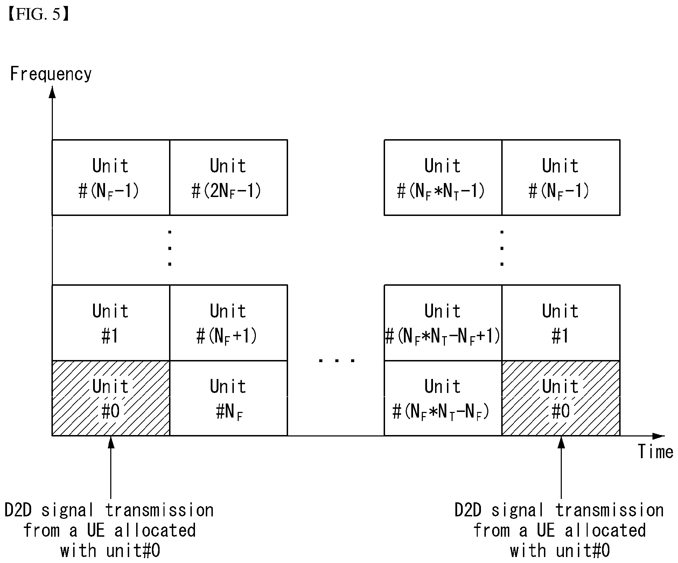

FIG. 5 shows a resource unit for V2X or SL communication based on an embodiment of the present disclosure.

Referring to FIG. 5, all frequency resources of a resource pool may be divided into NF resources, and all time resources of the resource pool may be divided into NT resources. Therefore, NF * NT resource units may be defined in the resource pool. FIG. 5 may show an example of a case where a corresponding resource pool is repeated with a period of NT subframes.

As shown in FIG. 5, one resource unit (e.g., Unit #0) may be periodically repeated. Alternatively, to obtain a diversity effect in a time or frequency domain, an index of a physical resource unit to which one logical resource unit is mapped may change to a pre-determined pattern over time. In a structure of such a resource unit, the resource pool may imply a set of resource units that can be used in transmission by a UE intending to transmit an SL signal.

The resource pool may be subdivided into several types. For example, based on content of an SL signal transmitted in each resource pool, the resource pool may be classified as follows.

(1) Scheduling assignment (SA) may be a signal including information related to a location of a resource used for transmission of an SL data channel by a transmitting UE, a modulation and coding scheme (MCS) or multiple input multiple output (MIMO) transmission scheme required for demodulation of other data channels, timing advance (TA), or the like. The SA can be transmitted by being multiplexed together with SL data on the same resource unit. In this case, an SA resource pool may imply a resource pool in which SA is transmitted by being multiplexed with SL data. The SA may also be referred to as an SL control channel.

(2) An SL data channel (physical sidelink shared channel (PSSCH)) may be a resource pool used by the transmitting UE to transmit user data. If SA is transmitted by being multiplexed together with SL data on the same resource unit, only an SL data channel of a type except for SA information may be transmitted in the resource pool for the SL data channel. In other words, resource elements (REs) used to transmit SA information on an individual resource unit in the SA resource pool may be used to transmit SL data still in the resource pool of the SL data channel. For example, the transmitting UE may transmit the PSSCH by mapping it to consecutive PRBs.

(3) A discovery channel may be a resource pool for transmitting, by the transmitting UE, information related to an ID thereof, or the like. Accordingly, the transmitting UE may allow an adjacent UE to discover the transmitting UE itself.

Even if the aforementioned SL signals have the same content, different resource pools may be used based on a transmission/reception attribute of the SL signals. For example, even the same SL data channel or discovery message may be classified again into different resource pools based on a scheme of determining SL signal transmission timing (e.g., whether it is transmitted at a reception time of a synchronization reference signal or transmitted by applying a specific timing advance at the reception time), a resource allocation scheme (e.g., whether a BS designates a transmission resource of an individual signal to an individual transmitting UE or whether the individual transmitting UE autonomously selects an individual signal transmission resource in a resource pool), a signal format (e.g., the number of symbols occupied by each SL signal or the number of subframes used in transmission of one SL signal), signal strength from the BS, transmit power strength of an SL UE, or the like.

Resource allocation in SL

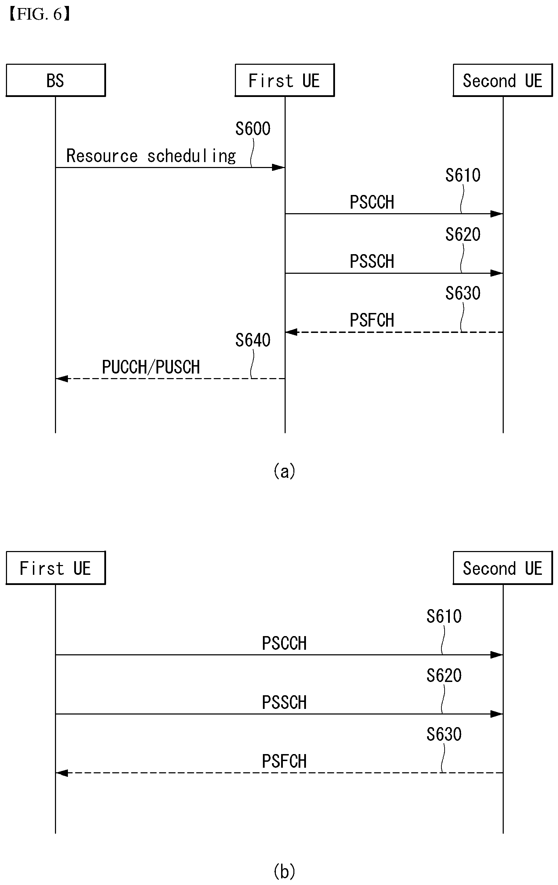

FIG. 6 shows a procedure of performing V2X or SL communication by a UE based on a transmission mode, based on an embodiment of the present disclosure.

The embodiment of FIG. 6 may be combined with various embodiments of the present disclosure. In various embodiments of the present disclosure, the transmission mode may be referred to as a mode or a resource allocation mode. Hereinafter, for convenience of explanation, in LTE, the transmission mode may be referred to as an LTE transmission mode. In NR, the transmission mode may be referred to as an NR resource allocation mode.

For example, (a) of FIG. 6 shows a UE operation related to an LTE transmission mode 1 or an LTE transmission mode 3. Alternatively, for example, (a) of FIG. 6 shows a UE operation related to an NR resource allocation mode 1. For example, the LTE transmission mode 1 may be applied to general SL communication, and the LTE transmission mode 3 may be applied to V2X communication.

For example, (b) of FIG. 6 shows a UE operation related to an LTE transmission mode 2 or an LTE transmission mode 4. Alternatively, for example, (b) of FIG. 6 shows a UE operation related to an NR resource allocation mode 2.

Referring to (a) of FIG. 6, in the LTE transmission mode 1, the LTE transmission mode 3, or the NR resource allocation mode 1, a base station may schedule SL resource(s) to be used by a UE for SL transmission. For example, in step S600, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S610, the first UE may transmit a PSCCH (e.g., sidelink control information (SCI) or 1st-stage SCI) to a second UE based on the resource scheduling. In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE. For example, HARQ feedback information (e.g., NACK information or ACK information) may be received from the second UE through the PSFCH. In step S640, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1. Table 5 shows an example of a DCI for SL scheduling.

[Table 5]

| 3GPP TS 38.212 |
|---|
| **7.3.1.4.1 Format 3_0**<br>DCI format 3_0 is used for scheduling of NR PSCCH and NR PSSCH in one cell. The following information is transmitted by means of the DCI format 3_0 with CRC scrambled by SL-RNTI or SL-CS-RNTI:<br><br>- Resource pool index - $\lceil \log_2 I \rceil$ bits, where *I* is the number of resource pools for transmission configured by the higher layer parameter *sl-TxPoolScheduling.*<br>- Time gap - 3 bits determined by higher layer parameter *sl-DCI-ToSL-Trans,* as defined in clause 8.1.2.1 of [6, TS 38.214]<br>- HARQ process number - 4 bits as defined in clause 16.4 of [5, TS 38.213]<br>- New data indicator - 1 bit as defined in clause 16.4 of [5, TS 38.213]<br><br>- Lowest index of the subchannel allocation to the initial transmission - $\lceil \log_2 (N_{\text{subChannel}}^{\text{SL}}) \rceil$ bits as defined in clause 8.1.2.2 of [6, TS 38.214]<br>- SCI format 1-A fields according to clause 8.3.1.1:<br>- Frequency resource assignment.<br>- Time resource assignment.<br><br>- PSFCH-to-HARQ feedback timing indicator - $\lceil \log_2 N_{\text{fb\_timing}} \rceil$ bits, where $N_{\text{fb\_timing}}$ is the number of entries in the higher layer parameter *sl-PSFCH-ToPUCCH,* as defined in clause 16.5 of [5, TS 38.213]<br>- PUCCH resource indicator - 3 bits as defined in clause 16.5 of [5, TS 38.213].<br>- Configuration index - 0 bit if the UE is not configured to monitor DCI format 3_0 with CRC scrambled by SL-CS-RNTI; otherwise 3 bits as defined in clause 8.1.2 of [6, TS 38.214]. If the UE is configured to monitor DCI format 3_0 with CRC scrambled by SL-CS-RNTI, this field is reserved for DCI format 3_0 with CRC scrambled by SL-RNTI.<br>- Counter sidelink assignment index - 2 bits<br>- 2 bits as defined in clause 16.5.2 of [5, TS 38.213] if the UE is configured with *pdsch-HARQ-ACK-Codebook = dynamic* |

(continued)

| 3GPP TS 38.212 |
|---|
| - 2 bits as defined in clause 16.5.1 of [5, TS 38.213] if the UE is configured with *pdsch-HARQ-ACK-Codebook* = *semi-static* |
| - Padding bits, if required |
| 7.3.1.4.2 Format 3_1 |
| DCI format 3_1 is used for scheduling of LTE PSCCH and LTE PSSCH in one cell. The following information is transmitted by means of the DCI format 3_1 with CRC scrambled by SL-L-CS-RNTI: |
| - Timing offset - 3 bits determined by higher layer parameter *sl-TimeOffsetEUTRA,* as defined in clause 16.6 of [5, TS 38.213] |
| - Carrier indicator -3 bits as defined in 5.3.3.1.9A of [11, TS 36.212]. |
| - Lowest index of the subchannel allocation to the initial transmission - $\left\lceil \log_2(N_{\mathrm{subchannel}}^{\mathrm{SL}}) \right\rceil$ bits as defined in 5.3.3.1.9A of [11, TS 36.212]. |
| - Frequency resource location of initial transmission and retransmission, as defined in 5.3.3.1.9A of [11, TS 36.212] |
| - Time gap between initial transmission and retransmission, as defined in 5.3.3.1.9A of [11, TS 36.212] |
| - SL index - 2 bits as defined in 5.3.3.1.9A of [11, TS 36.212] |
| - SL SPS configuration index - 3 bits as defined in clause 5.3.3.1.9A of [11, TS 36.212]. |
| - Activation/release indication - 1 bit as defined in clause 5.3.3.1.9A of [11, TS 36.212]. |

Referring to (b) of FIG. 6, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S610, a first UE which has selected resource(s) from a resource pool by itself may transmit a PSCCH (e.g., sidelink control information (SCI) or 1st-stage SCI) to a second UE by using the resource(s). In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE.

Referring to (a) or (b) of FIG. 6, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format. For example, the 1st-stage SCI format may include a SCI format 1-A, and the 2nd-stage SCI format may include a SCI format 2-A and/or a SCI format 2-B. Table 6 shows an example of a 1st-stage SCI format.

【Table 6】

| 3GPP TS 38.212 |
| --- |
| **8.3.1.1 SCI format 1-A**<br><br>SCI format 1-A is used for the scheduling of PSSCH and 2<sup>nd</sup>-stage-SCI on PSSCH<br><br>The following information is transmitted by means of the SCI format 1-A:<br><br>- Priority – 3 bits as specified in clause 5.4.3.3 of [12, TS 23.287] and clause 5.22.1.3.1 of [8, TS 38.321].<br><br>- Frequency resource assignment – $\left\lceil \log_2 \left( \frac{N_{subChannel}^{SL} \left( N_{subChannel}^{SL} + 1 \right)}{2} \right) \right\rceil$ bits when the value of the higher layer parameter *sl-MaxNumPerReserve* is configured to 2; otherwise $\left\lceil \log_2 \left( \frac{N_{subChannel}^{SL} \left( N_{subChannel}^{SL} + 1 \right) \left( 2N_{subChannel}^{SL} + 1 \right)}{6} \right) \right\rceil$ bits when the value of the higher layer parameter *sl-MaxNumPerReserve* is configured to 3, as defined in clause 8.1.2.2 of [6, TS 38.214].<br><br>- Time resource assignment – 5 bits when the value of the higher layer parameter *sl-MaxNumPerReserve* is configured to 2; otherwise 9 bits when the value of the higher layer parameter *sl-MaxNumPerReserve* is configured to 3, as defined in clause 8.1.2.1 of [6, TS 38.214].<br><br>- Resource reservation period – $\lceil \log_2 N_{rsv\_period} \rceil$ bits as defined in clause 8.1.4 of [6, TS 38.214], where $N_{rsv\_period}$ is the number of entries in the higher layer parameter *sl-ResourceReservePeriodList*, if higher layer parameter *sl-MultiReserveResource* is configured; 0 bit otherwise.<br><br>- DMRS pattern – $\lceil \log_2 N_{pattern} \rceil$ bits as defined in clause 8.4.1.1.2 of [4, TS 38.211], where $N_{pattern}$ is the number of DMRS patterns configured by higher layer parameter *sl-PSSCH-DMRS-TimePatternList*.<br><br>- 2<sup>nd</sup>-stage SCI format – 2 bits as defined in Table 8.3.1.1-1.<br><br>- Beta_offset indicator – 2 bits as provided by higher layer parameter *sl-BetaOffsets2ndSCI* and Table 8.3.1.1-2.<br><br>- Number of DMRS port – 1 bit as defined in Table 8.3.1.1-3.<br><br>- Modulation and coding scheme – 5 bits as defined in clause 8.1.3 of [6, TS 38.214].<br><br>- Additional MCS table indicator – as defined in clause 8.1.3.1 of [6, TS 38.214]: 1 bit if one MCS table is configured by higher layer parameter *sl-Additional-MCS-Table*; 2 bits if two MCS tables are configured by higher layer parameter *sl- Additional-MCS-Table*; 0 bit otherwise. |

- PSFCH overhead indication – 1 bit as defined clause 8.1.3.2 of [6, TS 38.214] if higher layer parameter *sl-PSFCH-Period* = 2 or 4; 0 bit otherwise.

- Reserved – a number of bits as determined by higher layer parameter *sl-NumReservedBits*, with value set to zero.

Table 8.3.1.1-1: 2nd-stage SCI formats

| Value of 2nd-stage SCI format field | 2nd-stage SCI format |
|---|---|
| 00 | SCI format 2-A |
| 01 | SCI format 2-B |
| 10 | Reserved |
| 11 | Reserved |

Table 8.3.1.1-2: Mapping of Beta_offset indicator values to indexes in Table 9.3-2 of [5, TS38.213]

| Value of Beta_offset indicator | Beta_offset index in Table 9.3-2 of [5, TS38.213] |
|---|---|
| 00 | 1st index provided by higher layer parameter *sl-BetaOffsets2ndSCI* |
| 01 | 2nd index provided by higher layer parameter *sl-BetaOffsets2ndSCI* |
| 10 | 3rd index provided by higher layer parameter *sl-BetaOffsets2ndSCI* |
| 11 | 4th index provided by higher layer parameter *sl-BetaOffsets2ndSCI* |

Table 8.3.1.1-3: Number of DMRS port(s)

| Value of the Number of DMRS port field | Antenna ports |
|---|---|
| 0 | 1000 |
| 1 | 1000 and 1001 |

Table 7 shows an example of a 2nd-stage SCI format.

【Table 7】

| 3GPP TS 38.212 |
| --- |

8.4.1.1  SCI format 2-A

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:

- HARQ process number – 4 bits as defined in clause 16.4 of [5, TS 38.213].

- New data indicator – 1 bit as defined in clause 16.4 of [5, TS 38.213].

- Redundancy version – 2 bits as defined in clause 16.4 of [6, TS 38.214].

- Source ID – 8 bits as defined in clause 8.1 of [6, TS 38.214].

- Destination ID – 16 bits as defined in clause 8.1 of [6, TS 38.214].

- HARQ feedback enabled/disabled indicator – 1 bit as defined in clause 16.3 of [5, TS 38.213].

- Cast type indicator – 2 bits as defined in Table 8.4.1.1-1.

- CSI request – 1 bit as defined in clause 8.2.1 of [6, TS 38.214].

**Table 8.4.1.1-1: Cast type indicator**

| Value of Cast type indicator | Cast type |
| --- | --- |
| 00 | Broadcast |
| 01 | Groupcast when HARQ-ACK information includes ACK or NACK |
| 10 | Unicast |
| 11 | Groupcast when HARQ-ACK information includes only NACK |

8.4.1.2  SCI format 2-B

SCI format 2-B is used for the decoding of PSSCH, with HARQ operation when HARQ-ACK information includes only NACK, or when there is no feedback of HARQ-ACK information.

The following information is transmitted by means of the SCI format 2-B:

- HARQ process number – 4 bits as defined in clause 16.4 of [5, TS 38.213].

- New data indicator – 1 bit as defined in clause 16.4 of [5, TS 38.213].

- Redundancy version – 2 bits as defined in clause 16.4 of [6, TS 38.214].

- Source ID – 8 bits as defined in clause 8.1 of [6, TS 38.214].

- Destination ID – 16 bits as defined in clause 8.1 of [6, TS 38.214].

- HARQ feedback enabled/disabled indicator – 1 bit as defined in clause 16.3 of [5, TS 38.213].

- Zone ID – 12 bits as defined in clause 5.8.11 of [9, TS 38.331].

- Communication range requirement – 4 bits determined by higher layer parameter *sl-ZoneConfigMCR-Index*.

Referring to (a) or (b) of FIG. 6, in step S630, the first UE may receive the PSFCH based on Table 8. For example, the first UE and the second UE may determine a PSFCH resource based on Table 8, and the second UE may transmit HARQ feedback to the first UE using the PSFCH resource.

【Table 8】

| 3GPP TS 38.213 |
| --- |
| 16.3    UE procedure for reporting HARQ-ACK on sidelink<br><br>A UE can be indicated by an SCI format scheduling a PSSCH reception, in one or more sub-channels from a number of $N_{\text{subch}}^{\text{PSSCH}}$ sub-channels, to transmit a PSFCH with HARQ-ACK information in response to the PSSCH reception. The UE provides HARQ-ACK information that includes ACK or NACK, or only NACK.<br><br>A UE can be provided, by *sl-PSFCH-Period-r16*, a number of slots in a resource pool for a period of PSFCH transmission occasion resources. If the number is zero, PSFCH transmissions from the UE in the resource pool are disabled.<br><br>A UE expects that a slot $t_k'^{SL}$ $(0 \le k < T'_{max})$ has a PSFCH transmission occasion resource if $k \bmod N_{\text{PSSCH}}^{\text{PSFCH}} = 0$, where $t_k'^{SL}$ is defined in [6, TS 38.214], and $T'_{max}$ is a number of slots that belong to the resource pool within 10240 msec according to [6, TS 38.214], and $N_{\text{PSSCH}}^{\text{PSFCH}}$ is provided by *sl-PSFCH-Period-r16*.<br><br>A UE may be indicated by higher layers to not transmit a PSFCH in response to a PSSCH reception [11, TS 38.321].<br><br>If a UE receives a PSSCH in a resource pool and the HARQ feedback enabled/disabled indicator field in an associated SCI format 2-A or a SCI format 2-B has value 1 [5, TS 38.212], the UE |

provides the HARQ-ACK information in a PSFCH transmission in the resource pool. The UE transmits the PSFCH in a first slot that includes PSFCH resources and is at least a number of slots, provided by *sl-MinTimeGapPSFCH-r16*, of the resource pool after a last slot of the PSSCH reception.

A UE is provided by *sl-PSFCH-RB-Set-r16* a set of $M_{PRB,set}^{PSFCH}$ PRBs in a resource pool for PSFCH transmission in a PRB of the resource pool. For a number of $N_{subch}$ sub-channels for the resource pool, provided by *sl-NumSubchannel*, and a number of PSSCH slots associated with a PSFCH slot that is less than or equal to $N_{PSSCH}^{PSFCH}$, the UE allocates the $[(i + j \cdot N_{PSSCH}^{PSFCH}) \cdot M_{subch,slot}^{PSFCH}, (i + 1 + j \cdot N_{PSSCH}^{PSFCH}) \cdot M_{subch,slot}^{PSFCH} - 1]$ PRBs from the $M_{PRB,set}^{PSFCH}$ PRBs to slot $i$ among the PSSCH slots associated with the PSFCH slot and sub-channel $j$, where $M_{subch,slot}^{PSFCH} = M_{PRB,set}^{PSFCH}/(N_{subch} \cdot N_{PSSCH}^{PSFCH})$, $0 \leq i < N_{PSSCH}^{PSFCH}$, $0 \leq j < N_{subch}$, and the allocation starts in an ascending order of $i$ and continues in an ascending order of $j$. The UE expects that $M_{PRB,set}^{PSFCH}$ is a multiple of $N_{subch} \cdot N_{PSSCH}^{PSFCH}$.

A UE determines a number of PSFCH resources available for multiplexing HARQ-ACK information in a PSFCH transmission as $R_{PRB,CS}^{PSFCH} = N_{type}^{PSFCH} \cdot M_{subch,slot}^{PSFCH} \cdot N_{CS}^{PSFCH}$ where $N_{CS}^{PSFCH}$ is a number of cyclic shift pairs for the resource pool and, based on an indication by higher layers,

- $N_{type}^{PSFCH} = 1$ and the $M_{subch,slot}^{PSFCH}$ PRBs are associated with the starting sub-channel of the corresponding PSSCH

- $N_{type}^{PSFCH} = N_{subch}^{PSSCH}$ and the $N_{subch}^{PSSCH} \cdot M_{subch,slot}^{PSFCH}$ PRBs are associated with one or more sub-channels from the $N_{subch}^{PSSCH}$ sub-channels of the corresponding PSSCH

The PSFCH resources are first indexed according to an ascending order of the PRB index, from the $N_{type}^{PSFCH} \cdot M_{subch,slot}^{PSFCH}$ PRBs, and then according to an ascending order of the cyclic shift pair index from the $N_{CS}^{PSFCH}$ cyclic shift pairs.

A UE determines an index of a PSFCH resource for a PSFCH transmission in response to a PSSCH reception as $(P_{ID} + M_{ID}) mod R_{PRB,CS}^{PSFCH}$ where $P_{ID}$ is a physical layer source ID provided by SCI format 2-A or 2-B [5, TS 38.212] scheduling the PSSCH reception, and $M_{ID}$ is the identity of the UE receiving the PSSCH as indicated by higher layers if the UE detects a SCI format 2-A with Cast type indicator field value of "01"; otherwise, $M_{ID}$ is zero.

A UE determines a $m_0$ value, for computing a value of cyclic shift $\alpha$ [4, TS 38.211], from a cyclic shift pair index corresponding to a PSFCH resource index and from $N_{CS}^{PSFCH}$ using Table 16.3-1.

**Table 16.3-1: Set of cyclic shift pairs**

| | $m_0$ |
|---|---|
| | |

| $N_{CS}^{PSFCH}$ | Cyclic Shift Pair Index 0 | Cyclic Shift Pair Index 1 | Cyclic Shift Pair Index 2 | Cyclic Shift Pair Index 3 | Cyclic Shift Pair Index 4 | Cyclic Shift Pair Index 5 |
|---|---|---|---|---|---|---|
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

A UE determines a $m_{cs}$ value, for computing a value of cyclic shift $\alpha$ [4, TS 38.211], as in Table 16.3-2 if the UE detects a SCI format 2-A with Cast type indicator field value of "01" or "10", or as in Table 16.3-3 if the UE detects a SCI format 2-B or a SCI format 2-A with Cast type indicator field value of "11". The UE applies one cyclic shift from a cyclic shift pair to a sequence used for the PSFCH transmission [4, TS 38.211].

**Table 16.3-2: Mapping of HARQ-ACK information bit values to a cyclic shift, from a cyclic shift pair, of a sequence for a PSFCH transmission when HARQ-ACK information includes ACK or NACK**

| HARQ-ACK Value | 0 (NACK) | 1 (ACK) |
|---|---|---|
| Sequence cyclic shift | 0 | 6 |

**Table 16.3-3: Mapping of HARQ-ACK information bit values to a cyclic shift, from a cyclic shift pair, of a sequence for a PSFCH transmission when HARQ-ACK information includes only NACK**

| HARQ-ACK Value | 0 (NACK) | 1 (ACK) |
|---|---|---|
| Sequence cyclic shift | 0 | N/A |

Referring to (a) of FIG. 6, in step S640, the first UE may transmit SL HARQ feedback to the base station through the PUCCH and/or the PUSCH based on Table 9.

【Table 9】

| 3GPP TS 38.213 |
|---|

16.5     UE procedure for reporting HARQ-ACK on uplink

A UE can be provided PUCCH resources or PUSCH resources [12, TS 38.331] to report HARQ-ACK information that the UE generates based on HARQ-ACK information that the UE obtains from PSFCH receptions, or from absence of PSFCH receptions. The UE reports HARQ-ACK information on the primary cell of the PUCCH group, as described in Clause 9, of the cell where the UE monitors PDCCH for detection of DCI format 3_0.

For SL configured grant Type 1 or Type 2 PSSCH transmissions by a UE within a time period provided by *sl-PeriodCG*, the UE generates one HARQ-ACK information bit in response to the PSFCH receptions to multiplex in a PUCCH transmission occasion that is after a last time resource, in a set of time resources.

For PSSCH transmissions scheduled by a DCI format 3_0, a UE generates HARQ-ACK information in response to PSFCH receptions to multiplex in a PUCCH transmission occasion that is after a last time resource in a set of time resources provided by the DCI format 3_0.

For each PSFCH reception occasion, from a number of PSFCH reception occasions, the UE generates HARQ-ACK information to report in a PUCCH or PUSCH transmission. The UE can be indicated by a SCI format to perform one of the following and the UE constructs a HARQ-ACK codeword with HARQ-ACK information, when applicable

-        if the UE receives a PSFCH associated with a SCI format 2-A with Cast type indicator field value of "10"

-        generate HARQ-ACK information with same value as a value of HARQ-ACK information the UE determines from a PSFCH reception in the PSFCH reception occasion and, if the UE determines that a PSFCH is not received at the PSFCH reception occasion, generate NACK

-        if the UE receives a PSFCH associated with a SCI format 2-A with Cast type indicator field value of "01"

-        generate ACK if the UE determines ACK from at least one PSFCH reception occasion, from the number of PSFCH reception occasions, in PSFCH resources corresponding to every identity $M_{ID}$ of the UEs that the UE expects to receive the PSSCH, as described in Clause 16.3; otherwise, generate NACK

-        if the UE receives a PSFCH associated with a SCI format 2-B or a SCI format 2-A with Cast type indicator field value of "11"

- generate ACK when the UE determines absence of PSFCH reception for each PSFCH reception occasion from the number of PSFCH reception occasions; otherwise, generate NACK

After a UE transmits PSSCHs and receives PSFCHs in corresponding PSFCH resource occasions, the priority value of HARQ-ACK information is same as the priority value of the PSSCH transmissions that is associated with the PSFCH reception occasions providing the HARQ-ACK information.

The UE generates a NACK when, due to prioritization, as described in Clause 16.2.4, the UE does not receive PSFCH in any PSFCH reception occasion associated with a PSSCH transmission in a resource provided by a DCI format 3_0 with CRC scrambled by a SL-RNTI or, for a configured grant, in a resource provided in a single period and for which the UE is provided a PUCCH resource to report HARQ-ACK information. The priority value of the NACK is same as the priority value of the PSSCH transmission.

The UE generates a NACK when, due to prioritization as described in Clause 16.2.4, the UE does not transmit a PSSCH in any of the resources provided by a DCI format 3_0 with CRC scrambled by SL-RNTI or, for a configured grant, in any of the resources provided in a single period and for which the UE is provided a PUCCH resource to report HARQ-ACK information. The priority value of the NACK is same as the priority value of the PSSCH that was not transmitted due to prioritization.

The UE generates an ACK if the UE does not transmit a PSCCH with a SCI format 1-A scheduling a PSSCH in any of the resources provided by a configured grant in a single period and for which the UE is provided a PUCCH resource to report HARQ-ACK information. The priority value of the ACK is same as the largest priority value among the possible priority values for the configured grant.

A UE does not expect to be provided PUCCH resources or PUSCH resources to report HARQ-ACK information that start earlier than $(N + 1) \cdot (2048 + 144) \cdot \kappa \cdot 2^{\mu} \cdot T_c$ after the end of a last symbol of a last PSFCH reception occasion, from a number of PSFCH reception occasions that the UE generates HARQ-ACK information to report in a PUCCH or PUSCH transmission, where

- $\kappa$ and $T_c$ are defined in [4, TS 38.211]
- $\mu = \min(\mu_{SL}, \mu_{UL})$, where $\mu_{SL}$ is the SCS configuration of the SL BWP and $\mu_{UL}$ is the SCS configuration of the active UL BWP on the primary cell
- $N$ is determined from $\mu$ according to Table 16.5-1

**Table 16.5-1: Values of $N$**

| $\mu$ | $N$ |
|---|---|
| 0 | 14 |
| 1 | 18 |
| 2 | 28 |
| 3 | 32 |

With reference to slots for PUCCH transmissions and for a number of PSFCH reception occasions ending in slot $n$, the UE provides the generated HARQ-ACK information in a PUCCH transmission within slot $n + k$, subject to the overlapping conditions in Clause 9.2.5, where $k$ is a number of slots indicated by a PSFCH-to-HARQ_feedback timing indicator field, if present, in a DCI format indicating a slot for PUCCH transmission to report the HARQ-ACK information, or $k$ is provided by *sl-PSFCH-ToPUCCH-CG-Type1-r16*. $k = 0$ corresponds to a last slot for a PUCCH transmission that would overlap with the last PSFCH reception occasion assuming that the start of the sidelink frame is same as the start of the downlink frame [4, TS 38.211].

For a PSSCH transmission by a UE that is scheduled by a DCI format, or for a SL configured grant Type 2 PSSCH transmission activated by a DCI format, the DCI format indicates to the UE that a PUCCH resource is not provided when a value of the PUCCH resource indicator field is zero and a value of PSFCH-to-HARQ feedback timing indicator field, if present, is zero. For a SL configured grant Type 1 PSSCH transmission, a PUCCH resource can be provided by *sl-N1PUCCH-AN-r16* and *sl-PSFCH-ToPUCCH-CG-Type1-r16*. If a PUCCH resource is not provided, the UE does not transmit a PUCCH with generated HARQ-ACK information from PSFCH reception occasions.

For a PUCCH transmission with HARQ-ACK information, a UE determines a PUCCH resource after determining a set of PUCCH resources for $O_{UCI}$ HARQ-ACK information bits, as described in Clause 9.2.1. The PUCCH resource determination is based on a PUCCH resource indicator field [5, TS 38.212] in a last DCI format 3_0, among the DCI formats 3_0 that have a value of a PSFCH-to-HARQ_feedback timing indicator field indicating a same slot for the PUCCH transmission, that the UE detects and for which the UE transmits corresponding HARQ-ACK information in the PUCCH where, for PUCCH resource determination, detected DCI formats are indexed in an ascending order across PDCCH monitoring occasion indexes.

A UE does not expect to multiplex HARQ-ACK information for more than one SL configured grants in a same PUCCH.

> A priority value of a PUCCH transmission with one or more sidelink HARQ-ACK information bits is the smallest priority value for the one or more HARQ-ACK information bits.
>
> In the following, the CRC for DCI format 3_0 is scrambled with a SL-RNTI or a SL-CS-RNTI.

Sidelink Control Information (SCI)

Control information transmitted by a BS to a UE through a PDCCH may be referred to as downlink control information (DCI), whereas control information transmitted by the UE to another UE through a PSCCH may be referred to as SCI. For example, the UE may know in advance a start symbol of the PSCCH and/or the number of symbols of the PSCCH, before decoding the PSCCH. For example, the SCI may include SL scheduling information. For example, the UE may transmit at least one SCI to another UE to schedule the PSSCH. For example, one or more SCI formats may be defined.

For example, a transmitting UE may transmit the SCI to a receiving UE on the PSCCH. The receiving UE may decode one SCI to receive the PSSCH from the transmitting UE.

For example, the transmitting UE may transmit two consecutive SCIs (e.g., 2-stage SCI) to the receiving UE on the PSCCH and/or the PSSCH. The receiving UE may decode the two consecutive SCIs (e.g., 2-stage SCI) to receive the PSSCH from the transmitting UE. For example, if SCI configuration fields are divided into two groups in consideration of a (relatively) high SCI payload size, an SCI including a first SCI configuration field group may be referred to as a first SCI or a 1st SCI, and an SCI including a second SCI configuration field group may be referred to as a second SCI or a 2nd SCI. For example, the transmitting UE may transmit the first SCI to the receiving UE through the PSCCH. For example, the transmitting UE may transmit the second SCI to the receiving UE on the PSCCH and/or the PSSCH. For example, the second SCI may be transmitted to the receiving UE through an (independent) PSCCH, or may be transmitted in a piggyback manner together with data through the PSSCH. For example, two consecutive SCIs may also be applied to different transmissions (e.g., unicast, broadcast, or groupcast).

In various embodiments of the present disclosure, since the transmitting UE may transmit at least one of the SCI, the first SCI, and/or the second SCI to the receiving UE through the PSCCH, the PSCCH may be replaced/substituted with at least one of the SCI, the first SCI, and/or the second SCI. Additionally/alternatively, for example, the SCI may be replaced/substituted with at least one of the PSCCH, the first SCI, and/or the second SCI. Additionally/alternatively, for example, since the transmitting UE may transmit the second SCI to the receiving UE through the PSSCH, the PSSCH may be replaced/substituted with the second SCI.

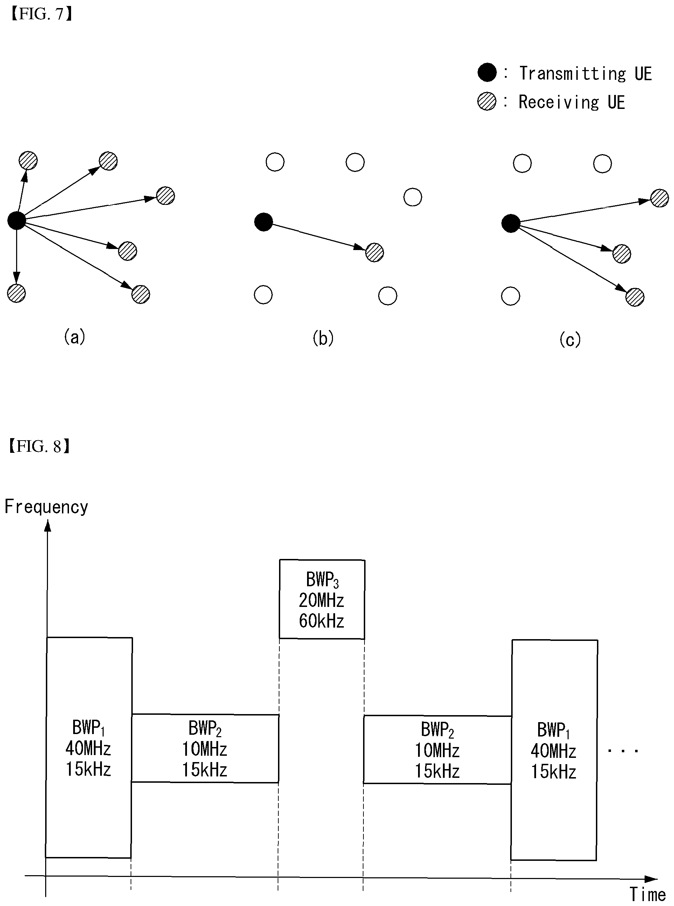

FIG. 7 shows three cast types based on an embodiment of the present disclosure.

Specifically, (a) of FIG. 7 shows broadcast-type SL communication, (b) of FIG. 7 shows unicast type-SL communication, and (c) of FIG. 7 shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Hereinafter, an RRC connection establishment between UEs will be described.

For V2X or SL communication, a transmitting UE may need to establish a (PC5) RRC connection with a receiving UE. For example, the UE may obtain V2X-specific SIB. For a UE which is configured to transmit V2X or SL communication by a higher layer and which has data to be transmitted, if a frequency at which at least the UE is configured to transmit SL communication is included in the V2X-specific SIB, the UE may establish an RRC connection with another UE without including a transmission resource pool for the frequency. For example, if an RRC connection is established between the transmitting UE and the receiving UE, the transmitting UE may perform unicast communication with respect to the receiving UE through the established RRC connection.

When the RRC connection is established between the UEs, the transmitting UE may transmit an RRC message to the receiving UE.

The receiving UE may perform antenna/resource de-mapping, demodulation, and decoding for received information. The information may be transferred to the RRC layer via the MAC layer, the RLC layer, and the PDCP layer. Accordingly, the receiving UE may receive the RRC message generated by the transmitting UE.

V2X or SL communication may be supported for a UE of an RRC_CONNECTED mode, a UE of an RRC_IDLE mode, and a UE of an (NR) RRC_INACTIVE mode. That is, the UE of the RRC_CONNECTED mode, the UE of the RRC_IDLE mode, and the UE of the (NR) RRC_INACTIVE mode may perform V2X or SL communication. The UE of the RRC_INACTIVE mode or the UE of the RRC_IDLE mode may perform V2X or SL communication by using a cell-specific configuration included in V2X-specific SIB.

RRC may be used to exchange at least UE capability and AS layer configuration. For example, a UE 1 may transmit UE capability and AS layer configuration of the UE 1 to a UE 2, and the UE 1 may receive UE capability and AS layer configuration of the UE 2 from the UE 2. In case of UE capability transfer, an information flow may be triggered during or after PC5-S signaling for a direct link setup.

Measurement and Reporting for SL

Hereinafter, SL measurement and reporting will be described.

For the purpose of QoS prediction, initial transmission parameter setting, link adaptation, link management, admission control, or the like, SL measurement and reporting (e.g., RSRP, RSRQ) between UEs may be considered in SL. For example, a receiving UE may receive a reference signal from a transmitting UE, and the receiving UE may measure a channel state for the transmitting UE based on the reference signal. In addition, the receiving UE may report channel state information (CSI) to the transmitting UE. SL-related measurement and reporting may include measurement and reporting of CBR and reporting of location information. Examples of channel status information (CSI) for V2X may include a channel quality indicator (CQI), a precoding matrix index (PM), a rank indicator (RI), reference signal received power (RSRP), reference signal received quality (RSRQ), pathgain/pathloss, a sounding reference symbol (SRS) resource indicator (SRI), a SRI-RS resource indicator (CRI), an interference condition, a vehicle motion, or the like. In case of unicast communication, CQI, RI, and PMI or some of them may be supported in a non-subband-based aperiodic CSI report under the assumption of four or less antenna ports. A CSI procedure may not be dependent on a standalone reference signal (RS). A CSI report may be activated or deactivated based on a configuration.

For example, the transmitting UE may transmit CSI-RS to the receiving UE, and the receiving UE may measure CQI or RI based on the CSI-RS. For example, the CSI-RS may be referred to as SL CSI-RS. For example, the CSI-RS may be confined within PSSCH transmission. For example, the transmitting UE may perform transmission to the receiving UE by including the CSI-RS on the PSSCH.

Hybrid Automatic Repeat Request (HARQ) for SL

Hereinafter, a hybrid automatic repeat request (HARQ) procedure will be described.

An error compensation scheme is used to secure communication reliability. Examples of the error compensation scheme may include a forward error correction (FEC) scheme and an automatic repeat request (ARQ) scheme. In the FEC scheme, errors in a receiving end are corrected by attaching an extra error correction code to information bits. The FEC scheme has an advantage in that time delay is small and no information is additionally exchanged between a transmitting end and the receiving end but also has a disadvantage in that system efficiency deteriorates in a good channel environment. The ARQ scheme has an advantage in that transmission reliability can be increased but also has a disadvantage in that a time delay occurs and system efficiency deteriorates in a poor channel environment.

A hybrid automatic repeat request (HARQ) scheme is a combination of the FEC scheme and the ARQ scheme. In the HARQ scheme, it is determined whether an unrecoverable error is included in data received by a physical layer, and retransmission is requested upon detecting the error, thereby improving performance.

In case of SL unicast and groupcast, HARQ feedback and HARQ combining in the physical layer may be supported. For example, when a receiving UE operates in a resource allocation mode 1 or 2, the receiving UE may receive the PSSCH from a transmitting UE, and the receiving UE may transmit HARQ feedback for the PSSCH to the transmitting UE by using a sidelink feedback control information (SFCI) format through a physical sidelink feedback channel (PSFCH).

For example, the SL HARQ feedback may be enabled for unicast. In this case, in a non-code block group (non-CBG) operation, if the receiving UE decodes a PSCCH of which a target is the receiving UE and if the receiving UE successfully decodes a transport block related to the PSCCH, the receiving UE may generate HARQ-ACK. In addition, the receiving UE may transmit the HARQ-ACK to the transmitting UE. Otherwise, if the receiving UE cannot successfully decode the transport block after decoding the PSCCH of which the target is the receiving UE, the receiving UE may generate the HARQ-NACK. In addition, the receiving UE may transmit HARQ-NACK to the transmitting UE.

For example, the SL HARQ feedback may be enabled for groupcast. For example, in the non-CBG operation, two HARQ feedback options may be supported for groupcast.

(1) Groupcast option 1: After the receiving UE decodes the PSCCH of which the target is the receiving UE, if the receiving UE fails in decoding of a transport block related to the PSCCH, the receiving UE may transmit HARQ-NACK to the transmitting UE through a PSFCH. Otherwise, if the receiving UE decodes the PSCCH of which the target is the receiving UE and if the receiving UE successfully decodes the transport block related to the PSCCH, the receiving UE may not transmit the HARQ-ACK to the transmitting UE.

(2) Groupcast option 2: After the receiving UE decodes the PSCCH of which the target is the receiving UE, if the receiving UE fails in decoding of the transport block related to the PSCCH, the receiving UE may transmit HARQ-NACK to the transmitting UE through the PSFCH. In addition, if the receiving UE decodes the PSCCH of which the target is the receiving UE and if the receiving UE successfully decodes the transport block related to the PSCCH, the receiving UE may transmit the HARQ-ACK to the transmitting UE through the PSFCH.

For example, if the groupcast option 1 is used in the SL HARQ feedback, all UEs performing groupcast communication may share a PSFCH resource. For example, UEs belonging to the same group may transmit HARQ feedback by using the same PSFCH resource.

For example, if the groupcast option 2 is used in the SL HARQ feedback, each UE performing groupcast communication may use a different PSFCH resource for HARQ feedback transmission. For example, UEs belonging to the same group may transmit HARQ feedback by using different PSFCH resources.

In the present disclosure, HARQ-ACK may be referred to as ACK, ACK information, or positive-ACK information, and HARQ-NACK may be referred to as NACK, NACK information, or negative-ACK information.

Bandwidth Part and Resource Pool

Hereinafter, a bandwidth part (BWP) and a resource pool will be described.

When using bandwidth adaptation (BA), a reception bandwidth and transmission bandwidth of a UE are not necessarily as large as a bandwidth of a cell, and the reception bandwidth and transmission bandwidth of the BS may be adjusted. For example, a network/BS may inform the UE of bandwidth adjustment. For example, the UE receive information/configuration for bandwidth adjustment from the network/BS. In this case, the UE may perform bandwidth adjustment based on the received information/configuration. For example, the bandwidth adjustment may include an increase/decrease of the bandwidth, a location change of the bandwidth, or a change in subcarrier spacing of the bandwidth.

For example, the bandwidth may be decreased during a period in which activity is low to save power. For example, the location of the bandwidth may move in a frequency domain. For example, the location of the bandwidth may move in the frequency domain to increase scheduling flexibility. For example, the subcarrier spacing of the bandwidth may be changed. For example, the subcarrier spacing of the bandwidth may be changed to allow a different service. A subset of a total cell bandwidth of a cell may be referred to as a bandwidth part (BWP). The BA may be performed when the BS/network configures the BWP to the UE and the BS/network informs the UE of the BWP currently in an active state among the configured BWPs.

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit a SL channel or a SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

FIG. 8 shows a plurality of BWPs based on an embodiment of the present disclosure.

Referring to FIG. 8, a BWP1 having a bandwidth of 40 MHz and a subcarrier spacing of 15 kHz, a BWP2 having a bandwidth of 10 MHz and a subcarrier spacing of 15 kHz, and a BWP3 having a bandwidth of 20 MHz and a subcarrier spacing of 60 kHz may be configured.

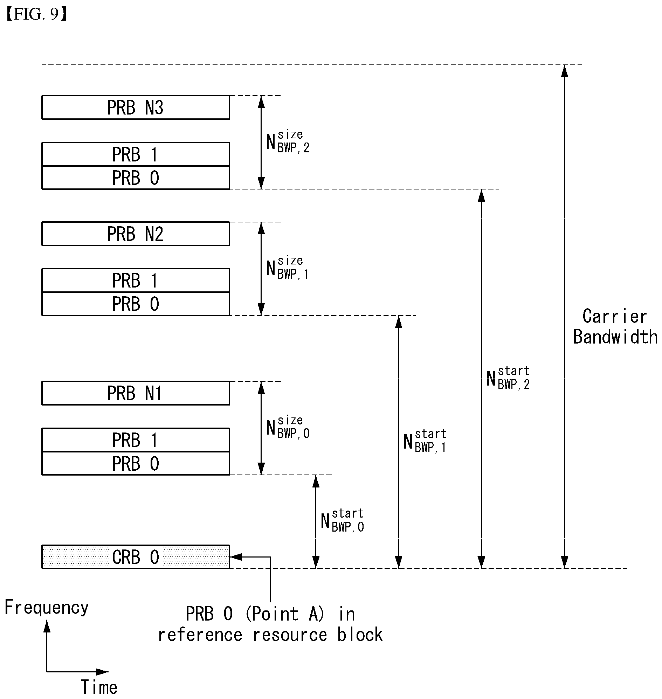

FIG. 9 shows a BWP based on an embodiment of the present disclosure. It is assumed in the embodiment of FIG. 9 that the number of BWPs is 3.

Referring to FIG. 9, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset NstartBWP from the point A, and a bandwidth NsizeBWP. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

The BWP may be defined for SL. The same SL BWP may be used in transmission and reception. For example, a transmitting UE may transmit an SL channel or an SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. The SL BWP may be (pre-configured in a carrier with respect to an out-of-coverage NR V2X UE and an RRC_IDLE UE. For the UE in the RRC_CONNECTED mode, at least one SL BWP may be activated in the carrier.

A resource pool may be a group of time-frequency resources that may be used for SL transmission and/or SL reception. From a perspective of the UE, time-domain resources in the resource pool may not be consecutive. A plurality of resource pools may be (pre-)configured to the UE in one carrier. From a perspective of a physical layer, the UE may perform unicast, groupcast, and broadcast communication by using the configured or pre-configured resource pool.

Sidelink (SL) congestion control

Hereinafter, sidelink (SL) congestion control will be described.

If a UE autonomously determines an SL transmission resource, the UE also autonomously determines a size and frequency of use for a resource used by the UE. Of course, due to a constraint from a network or the like, it may be restricted to use a resource size or frequency of use, which is greater than or equal to a specific level. However, if all UEs use a relatively great amount of resources in a situation where many UEs are concentrated in a specific region at a specific time, overall performance may significantly deteriorate due to mutual interference.

Accordingly, the UE may need to observe a channel situation. If it is determined that an excessively great amount of resources are consumed, it is preferable that the UE autonomously decreases the use of resources. In the present disclosure, this may be defined as congestion control (CR). For example, the UE may determine whether energy measured in a unit time/frequency resource is greater than or equal to a specific level, and may adjust an amount and frequency of use for its transmission resource based on a ratio of the unit time/frequency resource in which the energy greater than or equal to the specific level is observed. In the present disclosure, the ratio of the time/frequency resource in which the energy greater than or equal to the specific level is observed may be defined as a channel busy ratio (CBR). The UE may measure the CBR for a channel/frequency. Additionally, the UE may transmit the measured CBR to the network/BS.

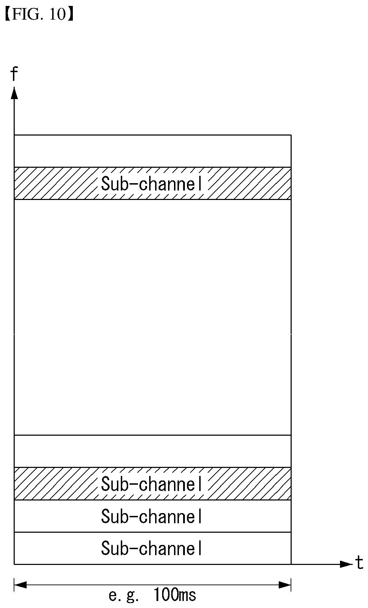

FIG. 10 shows a resource unit for CBR measurement based on an embodiment of the present disclosure.

Referring to FIG. 10, CBR may denote the number of sub-channels in which a measurement result value of a received signal strength indicator (RSSI) has a value greater than or equal to a pre-configured threshold as a result of measuring the RSSI by a UE on a sub-channel basis for a specific period (e.g., 100 ms). Alternatively, the CBR may denote a ratio of sub-channels having a value greater than or equal to a pre-configured threshold among sub-channels for a specific duration. For example, in the embodiment of FIG. 10, if it is assumed that a hatched sub-channel is a sub-channel having a value greater than or equal to a pre-configured threshold, the CBR may denote a ratio of the hatched sub-channels for a period of 100 ms. Additionally, the CBR may be reported to the BS.

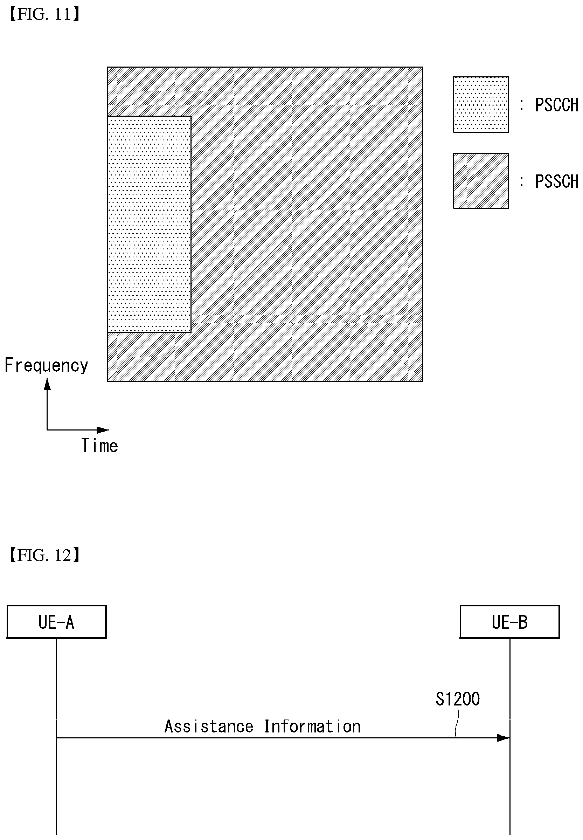

FIG. 11 illustrates a resource pool related to CBR measurement.

For example, as shown in the embodiment of FIG. 11, if a PSCCH and a PSSCH are multiplexed, the UE may perform one CBR measurement for one resource pool. Herein, if a PSFCH resource is configured or pre-configured, the PSFCH resource may be excluded in the CBR measurement.

Further, congestion control considering a priority of traffic (e.g. packet) may be necessary. To this end, for example, the UE may measure a channel occupancy ratio (CR). Specifically, the UE may measure the CBR, and the UE may determine a maximum value CRlimitk of a channel occupancy ratio k (CRk) that can be occupied by traffic corresponding to each priority (e.g., k) based on the CBR. For example, the UE may derive the maximum value CRlimitk of the channel occupancy ratio with respect to a priority of each traffic, based on a predetermined table of CBR measurement values. For example, in case of traffic having a relatively high priority, the UE may derive a maximum value of a relatively great channel occupancy ratio. Thereafter, the UE may perform congestion control by restricting a total sum of channel occupancy ratios of traffic, of which a priority k is lower than i, to a value less than or equal to a specific value. Based on this method, the channel occupancy ratio may be more strictly restricted for traffic having a relatively low priority.

In addition thereto, the UE may perform SL congestion control by using a method of adjusting a level of transmit power, dropping a packet, determining whether retransmission is to be performed, adjusting a transmission RB size (MCS coordination), or the like.

Table 10 shows an example of SL CBR and SL RSSI.

[Table 10]

| SL CBR | |
|---|---|
| Definition | SL Channel Busy Ratio (SL CBR) measured in slot $n$ is defined as the portion of sub-channels in the resource pool whose SL RSSI measured by the UE exceed a (pre-)configured threshold sensed over a CBR measurement window [$n$-a, $n$-1], wherein a is equal to 100 or 100·$2^\mu$ slots, according to higher layer parameter *timeWindowSize-CBR*. |
| Applicable for | RRC_IDLE intra-frequency,<br>RRC_IDLE inter-frequency,<br>RRC_CONNECTED intra-frequency,<br>RRC_CONNECTED inter-frequency |
| **SL RSSI** | |
| Definition | Sidelink Received Signal Strength Indicator (SL RSSI) is defined as the linear average of the total received power (in [W]) observed in the configured sub-channel in OFDM symbols of a slot configured for PSCCH and PSSCH, starting from the 2nd OFDM symbol.<br>For frequency range 1, the reference point for the SL RSSI shall be the antenna connector of the UE. For frequency range 2, SL RSSI shall be measured based on the combined signal from antenna elements corresponding to a given receiver branch. For frequency range 1 and 2, if receiver diversity is in use by the UE, the reported SL RSSI value shall not be lower than the corresponding SL RSSI of any of the individual receiver branches. |
| Applicable for | RRC_IDLE intra-frequency,<br>RRC_IDLE inter-frequency,<br>RRC_CONNECTED intra-frequency,<br>RRC_CONNECTED inter-frequency |

Referring to Table 10, the slot index may be based on a physical slot index.

Table 11 shows an example of SL Channel Occupancy Ratio (CR).

【Table 11】

| Definition | Sidelink Channel Occupancy Ratio (SL CR) evaluated at slot $n$ is defined as the total number of sub-channels used for its transmissions in slots [$n$-a, $n$-1] and granted in slots [$n$, $n$+b] divided by the total number of configured sub-channels in the transmission pool over [$n$-a, $n$+b]. |
|---|---|
| Applicable for | RRC_IDLE intra-frequency,<br>RRC_IDLE inter-frequency,<br>RRC_CONNECTED intra-frequency,<br>RRC_CONNECTED inter-frequency |

NOTE 1: $a$ is a positive integer and $b$ is 0 or a positive integer; $a$ and $b$ are determined by UE implementation with $a+b+1$ = 1000 or 1000·$2^\mu$ slots, according to higher layer parameter *timeWindowSize-CR*, b < (a+b+1)/2, and n+b shall not exceed the last transmission opportunity of the grant for the current transmission.

NOTE 2: SL CR is evaluated for each (re)transmission.

NOTE 3: In evaluating SL CR, the UE shall assume the transmission parameter used at slot $n$ is reused according to the existing grant(s) in slot [$n+1$, $n$+b] without packet dropping.

NOTE 4: The slot index is based on physical slot index.

NOTE 5: SL CR can be computed per priority level

NOTE 6: A resource is considered granted if it is a member of a selected sidelink grant as defined in TS 38.321 [7].

In the present disclosure, a wording "configuration or definition" may be interpreted as being (pre-)configured from the base station or the network (via pre-defined signaling (e.g., SIB, MAC signaling, or RRC signaling). For example, "A may be configured" may include "the base station or network (pre-)configures/defines or announces A for the UE". Alternatively, the wording "configuration or definition" may be interpreted as being pre-configured or defined by a system. For example, "A may be configured" may include "A is pre-configured/defined by the system".

The base station may allocate the UE a resource (hereinafter, "SL resource") used for transmission and reception of SL channel/signal. For example, the base station may transmit information related to the resources to the UE. In the present disclosure, a scheme in which the base station allocates the SL resource to the UE may be referred to as mode 1 scheme, mode 1 operation, or resource allocation mode 1.

On the other hand, the UE may select the SL resource within a resource pool based on the sensing. In the present disclosure, a scheme in which the UE selects the SL resource may be referred to as mode 2 scheme, mode 2 operation, or resource allocation mode 3. For example, in the resource allocation mode 2, the UE may detect SCI transmitted by another UE, the UE may identify a resource reserved by another UE based on the SCI, and the UE may acquire an RSRP measurement value. And, the UE may select a resource to be used for the SL transmission except for a specific resource within a resource selection window based on the sensing result.

For the sensing operation, the UE may refer to resource allocation information received via the first SCI. However, due to overhead of the first SCI, an amount of information that the UE can acquire on the first SCI may be limited.

According to various embodiments of the present disclosure, a second UE may transmit additional assistance information in order to assist a sensing operation and/or a resource (re)selection operation of a first UE. For PSSCH detection performance improvement and/or half-duplex limit reduction and/or reserved resource selection for transmission and reception of a specific signal, etc., the first UE may use the assistance information received from the second UE. In an embodiment of the present disclosure, for convenience of explanation, it is assumed that a UE-A transmits assistance information to a UE-B. It is also assumed that the UE-B selects a resource for PSCCH/PSSCH to be transmitted to the UE-A and/or a resource for PSCCH/PSSCH to be transmitted to a UE-C (i.e., a third UE) based on the assistance information received from the UE-A.

FIG. 12 illustrates a procedure in which a UE-A transmits assistance information to a UE-B based on an embodiment of the present disclosure. The embodiment of FIG. 12 may be combined with various embodiments of the present disclosure.

Referring to FIG. 12, in step S 1200, the UE-A may transmit assistance information to the UE-B. For example, the UE-B may select a resource for PSCCH/PSSCH to be transmitted to the UE-A based on the assistance information received from the UE-A, and the UE-B may perform SL transmission using the resource. For example, the UE-B may select a resource for PSCCH/PSSCH to be transmitted to the UE-C based on the assistance information received from the UE-A, and the UE-B may perform SL transmission using the resource. In the present disclosure, the assistance information may be referred to as additional information or coordination information.

According to an embodiment of the present disclosure, the UE-A may indicate, to the UE-B, resource information not capable of performing resource information and/or sidelink reception that allow the UE-A to perform sidelink reception from the UE-B.

According to an embodiment of the present disclosure, the UE-A may indicate, to the UE-B, information on preferred resources and/or non-preferred resources for PSCCH/PSSCH transmission (for the UE-A or a different UE (e.g., UE-C) from the UE-A). For example, the preferred resources or the non-preferred resources may be a set of resources in which the RSRP measurement value is equal to or less than or below and/or is equal to or greater than or exceeds a certain level (a (pre-)configured threshold) based on a sensing result of the UE-A. For example, the preferred resources or the non-preferred resources may be resource information that the UE-C can properly receive or has a high detection probability when the UE-B transmits the PSCCH/PSSCH based on SCI detected by the UE-A.

According to an embodiment of the present disclosure, the UE-A may indicate information on resource in which a resource conflict occurs for selected resources and/or reserved resources of the UE-B. For example, the resource conflict may occur when HALF-DUPLEX problem occurs between the UE-B and a UE receiving the PSCCH/PSSCH transmitted by the UE-B, and/or when the selected or reserved resource of the UE-B overlaps a selected or reserved resource of another UE at a frequency and/or time axis.

When the UE-A transmits coordination information and the UE-B selects PSCCH/PSSCH resources to be again transmitted to UE-A based on the coordination information, the UE-A may include sidelink transmission resources of the UE-A or information about a time point upon constructing the coordination information. The sidelink transmission resources may be divided into resources for an initial transmission of the UE-A and retransmission resources for each initial transmission. In a retransmission based on SL HARQ-ACK feedback, when SL HARQ-ACK state for the corresponding TB is ACK, the retransmission reserved resource may not be used. Whether to activate or deactivate SL HARQ-ACK feedback for the TB transmission with respect to periodically reserved resources of the UE-A may be different for each period. For example, when the sidelink transmission for a target reserved resource is BLIND RETRANSMISSION (or when the SL HARQ-ACK feedback is deactivated), the UE-A may use selected resources and/or reserved resources corresponding to initial transmission and retransmission when generating coordination information to be transmitted to the UE-B.

**EP 4 336 922 A1**

For example, when the SL HARQ-ACK feedback with respect to the sidelink transmission for the target reserved resource is activated, the UE-A may use selected resources and/or reserved resources corresponding to initial transmission when generating coordination information to be transmitted to the UE-B, and may not use retransmission resources.

For example, when the SL HARQ-ACK feedback with respect to the sidelink transmission for the target reserved resource is activated, and/or when a congestion control level is greater than or equal to or exceeds a (pre-)configured threshold, the UE-A may use all or some of selected resources and/or reserved resources corresponding to initial transmission and retransmission reserved resources for the initial transmission when generating coordination information to be transmitted to the UE-B.

For example, an amount of retransmission reserved resources (the number of retransmission time points) to be used when generating the coordination information may be (pre)configured for each congestion control level. In this case, for example, when the congestion control level is less than a (pre-)configured threshold, the UE-A may use selected resources and/or reserved resources corresponding to initial transmission when generating the coordination information to be transmitted to the UE-B, and may not use retransmission resources. For example, the amount of retransmission reserved resources (the number of retransmission time points) to be used when generating the coordination information may be configured via PC5-RRC.

For example, when the SL HARQ-ACK feedback with respect to the sidelink transmission for the target reserved resource is activated, the UE-A may use as many retransmission reserved resources as the number of retransmission resources that the UE-A actually uses in a previous period of the target reserved resource, and selected resources and/or reserved resources corresponding to initial transmission, when generating the coordination information to be transmitted to the UE-B.

For example, the previous period of the target reserved resource may determine the amount/number of retransmission reserved resources that the UE-A refers to upon generating the coordination information, based on statistics on the amount/number of retransmission resources that the UE-A actually uses in a plurality of periods. In this case, for example, if there is no resource selected or reserved in the previous period of the target reserved resource, the UE-A may use selected resources and/or reserved resources corresponding to initial transmission when generating the coordination information to be transmitted to the UE-B, and may not use retransmission resources. For example, if there is no resource selected or reserved in the previous period of the target reserved resource, the UE-A may generate the coordination information to be transmitted to the UE-B using selected resources and/or reserved resources corresponding to initial transmission and all retransmission reserved resources corresponding to the initial transmission.

For example, when a PSFCH resource is not configured for a resource pool corresponding to the periodically reserved resource of the UE-A, the UE-A may use selected resources and/or reserved resources corresponding to initial transmission and retransmission resources when generating the coordination information to be transmitted to the UE-B. For example, when the PSFCH resource is configured for the resource pool corresponding to the periodically reserved resource of the UE-A, the UE-A may use selected resources and/or reserved resources corresponding to initial transmission when generating the coordination information to be transmitted to the UE-B, and may not use retransmission resources.

In an embodiment of the present disclosure, if the coordination information is a non-preferred resource, it may be in the form including the resource, and if the coordination information is a preferred resource, it may be in the form avoiding the resource.

There may be a case where some transmission/reserved resources of the UE-A are not indicated via SCI of previous other transmission/reserved resources. For example, when an interval between transmission/reserved resources of the UE-A is equal to or greater than 31 or 32 slots, transmission/reserved resources of a late time point may not be indicated via SCI to be transmitted at transmission/reserved resources of an early time point. For example, in the above, the number of slots may be the number of slots belonging to the transmission resource pool of the UE-A. For example, the UE-A may limit transmission/reserved resources of the UE-A, that can be used to generate additional information, to which the UE-A does not indicate reservation information via SCI at another time point.

For example, when transmission reserved resources of the UE-A are located in a first slot, a second slot, a third slot, and a fourth slot, a difference between the start of the first slot and the start of the second slot is less than or equal to 31 or 32, a difference between the start of the second slot and the start of the third slot is greater than 31 or 32, and a difference between the start of the third slot and the start of the fourth slot is less than or equal to 31 or 32, the UE-A may determine preferred resources and/or non-preferred resources for the UE-B transmission using transmission/reserved resources of the first slot and transmission/reserved resources of the third slot. That is, for example, the UE-A may determine reception preferred and/or non-preferred resource/slot locations of the UE-A to the UE-B using the first transmission/reserved resource of each transmission reservation chain. In the above, locations of a reserved resource of the second slot and a reserved resource of the fourth slot may be predicted via SCI that the UE-B receives from the UE-A in the first slot and the third slot, respectively. For example, in the above, calculating the difference between the slots may be counting slots belonging to the transmission resource pool of the UE-A.

The UE-B may receive coordination information from the UE-A and have a result based on the sensing performed by the UE-B itself. In this case, the UE-A may use coordination information and/or its own sensing result when determining PSCCH/PSSCH transmission resources. In a set of available resources determined based on the sensing result, it may consist of resources with a high interference level in a process of checking the available resource rate. Alternatively, the UE-B may not be able to secure the sufficient sensing result due to DRX operation or HALF-DUPLEX restrictions.

For example, when boosting for a RSRP threshold is performed more than a (pre)set number of times in a process for the UE-B to select the available resources based on the sensing and/or when the boosted RSRP threshold is greater than or equal to a (pre)set value, the UE-B may ignore/skip the sensing result of the UE-B upon determining PSCCH/PSSCH transmission resources. For example, the number of boosting and/or the comparison value for the RSRP threshold may be (pre)set for each transmission priority value and/or each reception priority value of the UE-B.

For example, checking whether the number of boosting and/or the RSRP threshold is equal to or greater than a specific value may be performed for each transmission priority value and/or each reception priority value.

For example, when the number of boosting and/or the RSRP threshold for a specific transmission priority value and/or a specific reception priority value is equal to or greater than a specific value, reserved resources of other UE corresponding to the reception priority value may be included in the set of available resources again.

For example, checking whether the number of boosting is equal to or greater than a specific value may be performed for each resource selection procedure. That is, for example, when boosting the RSRP threshold for combinations of a plurality of transmission priorities/reception priorities, the total number of boosting may be added. Alternatively, for example, when application of the boosting is determined, it may be performed for the RSRP thresholds for all the combinations of transmission priorities/reception priorities.

For example, when the number of boosting is equal to or greater than a specific value, the use of the sensing result of the UE-B may be canceled. In this case, for example, the UE-B may determine PSCCH/PSSCH transmission resources using coordination information obtained from the UE-A and/or determine PSCCH/PSSCH transmission resources through a random selection.

For example, when the frequency at which the UE-B does not detect SCI within a sensing window of the UE-B is equal to or greater than or exceeds a (pre-)configured threshold, the UE-B may ignore/skip the sensing result of the UE-B upon determining PSCCH/PSSCH transmission resources. In this case, for example, the UE-B may determine PSCCH/PSSCH transmission resources using coordination information obtained from the UE-A and/or determine PSCCH/PSSCH transmission resources through a random selection.

For example, when the UE-B performs a PARTIAL sensing, if the number of available resource slots without a sensing result and/or the number of available resource slots having incomplete sensing results (SCI being not detected in some sensing slots) is less than a specific threshold value according to the SCI non-detection situation upon determining a sensing slot from available resource slots of the UE-B, the UE-B may ignore/skip the sensing result of the available slot or the entire sensing result of the UE-B upon determining PSCCH/PSSCH transmission resources. For example, the specific threshold may be a (pre)set value or may be a minimum value for the available resource slot.

For example, after determining a set of available resources according to a SCI non-detection slot (excluding all resources within a resource selection window derived based on a resource reservation period candidate value from the SCI non-detection slot from the set of available resources), a ratio of available resources to an amount of all resources of available resource slots within the resource selection window is less than a (pre-)configured threshold, the UE-B may ignore/skip the sensing result of the UE-B. Further, the UE-B may determine PSCCH/PSSCH transmission resources using coordination information obtained from the UE-A and/or determine PSCCH/PSSCH transmission resources through a random selection.

For example, if FULL SENSING is not configured for a transmission resource pool in which transmission of the UE-B is performed, the UE-B may ignore/skip the sensing result of the UE-B upon determining PSCCH/PSSCH transmission resources.

For example, if RANDOM SELECTION is configured for the transmission resource pool in which transmission of the UE-B is performed, the UE-B may ignore/skip the sensing result of the UE-B upon determining PSCCH/PSSCH transmission resources.

For example, if PARTIAL SENSING is configured for the transmission resource pool in which transmission of the UE-B is performed, the UE-B may ignore/skip the sensing result of the UE-B upon determining PSCCH/PSSCH transmission resources. For example, the UE-B may ignore/skip the sensing result of the UE-B based on Preserved (resource reservation period used for sensing) set and/or k value (information on which sensing slots are derived from available slots for which repetition of the Preserved) configured for the PARTIAL SENSING operation.

For example, when a ratio of the number of sensing slots according to PARTIAL SENSING configuration to the number of all slots within the sensing window based on the FULL SENSING is below or equal to or less than a (pre-)configured threshold, the UE-B may ignore/skip the sensing result of the UE-B.

For example, when a ratio of the number of sensing slots according to the PARTIAL SENSING configuration to the maximum number of sensing slots that can be performed in the PARTIAL SENSING (based on configuration of Preserved and/or k value) is below or equal to or less than a (pre-)configured threshold, the UE-B may ignore/skip the sensing result of the UE-B. For example, when the UE-B does not receive or acquire VALID additional information from the UE-A at a time point at which resource (re)selection is triggered or within a (pre)set time duration from the time point in the above situation, the resource (re)selection of the UE-B may be performed based on the sensing result of the UE-B.

In embodiments of the present disclosure, a threshold may be configured for each priority value, and may be differently configured based on a priority value of the UE-B transmission.

A relationship between a UE transmitting additional information that can be used for resource (re)selection of a transmitting UE and the transmitting UE may be based on the following 1) or 2).

1) Resources for PSCCH/PSSCH transmission that the transmitting UE determines using additional information may be used for transmission to a UE transmitting the additional information.

2) Resources for PSCCH/PSSCH transmission that the transmitting UE determines using additional information may be used for transmission to a UE (including or not including the UE transmitting the additional information) other than a UE transmitting the additional information.

For example, when it is determined that the UE-B operates in a scenario of the 2), and/or when each UE-B recognizes information (e.g., SOURCE ID and/or DESTINATION ID to be used for transmission) of other UEs belonging to the same UE group, the UE-B may ignore/skip all or part of the sensing result of the UE-B upon selecting PSCCH/PSSCH transmission resources. For example, part of the sensing result of the UE-B may be for a PSCCH/PSSCH resource transmitted by a UE, that receives coordination information from the same UE-A and uses it to determine transmission resources, or determined based on the coordination information.

In the next system, a UE performing the PARTIAL sensing and/or a UE performing the random selection and/or a UE with limited sidelink transmission and reception may be introduced. For example, there may be a UE type A that performs PSCCH/PSSCH transmission but does not perform sidelink reception, a UE type B that performs PSCCH/PSSCH and/or S-SSB transmission and PSFCH and/or S-SSB reception but does not perform remaining sidelink reception, a UE type D that performs sidelink transmission and reception but performs sensing only in a limited time domain, and the like. In this case, the UE type D may be allowed to be a UE (UE-A) generating and transmitting coordination information to another UE.

For example, a UE performing resource (re)selection based on the PARTIAL sensing may not perform sensing for the purpose of generating coordination information, other than a sensing slot and/or a slot expecting sidelink data reception for sensing purpose, such as sensing slots derived from available resource slots determined by the UE and/or a CONTINUOUS sensing window (located at the start of the resource selection window or in front of a first available resource slot). That is, for example, a UE performing resource (re)selection based on the PARTIAL sensing may generate coordination information based on SCI acquired in a sensing slot for performing the PARTIAL sensing and/or a sidelink data reception slot. For example, a UE performing resource (re)selection based on the PARTIAL sensing may determine an area, in which the UE can receive a sidelink based on DRX operation or PARTIAL sensing slot information, and may provide it to the UE-B.

For example, a UE performing resource (re)selection based on the PARTIAL sensing may be unable to select resources corresponding to slots other than available resource slots determined by the UE, as a PSCCH/PSSCH transmission resource, regardless of whether there is an indication in the coordination information. For example, a UE (UE-B) performing resource (re)selection based on the PARTIAL sensing may transmit all or part of information on available resource slots determined by the corresponding UE to the UE-A through a request signal (i.e., a signal requesting the coordination information). In this case, for example, the UE-A may indicate non-preferred resource information and/or preferred resource information for the available slots provided from the UE-B.

A processing time T_proc,0 or T_0 (a value with T_proc,0 as an upper limit) may be required for the UE to generate sensing information. A minimum processing time T_proc,1 or T_1 (a value with T_proc,1 as an upper limit) may be required for the UE to perform resource (re)selection and determine resources. In this case, when the UE-A generates and transmits coordination information based on sensing information or other factors, a time window capable of receiving/obtaining factors corresponding to the coordination information may need to be determined. For example, regarding coordination information transmitted in slot n, received SCI, received DCI, and/or SL or UL transmission information that can be referred to for generating the coordination information may be limited to those prior to a specific time point from the slot n.

For example, the specific time point may be determined based on at least one of T_proc,0, T_0, T_proc,1, T_1 and/or a PSSCH-to-PSFCH minimum timing value. In this case, the coordination information may be transmitted in the form of a PSFCH format. As a detailed example, the specific time point may be determined as a time point prior to T_proc,0 from the slot n.

For example, the specific time point may be determined based on a value having T_proc,0, T_0, T_proc,0+T_proc,1, T_0+T_proc,1, T_0+T_1, or T_proc,0+T_proc,1 as an upper limit. As a detailed example, the specific time point may be determined as a time point prior to T_0+T_proc,1 from the slot n. In this case, the coordination information may be transmitted via PSCCH and/or PSSCH.

When the UE-B receiving the coordination information uses the coordination information for resource (re)selection, it may take time to detect and/or detect the coordination information and it may take time to perform again resource selection of the UE-B. For example, in resource (re)selection that the UE-B performs based on the coordination information received in slot n, a first time point at which resource selection is possible (the start of the resource selection window) may be limited to those after the specific time point from slot n.

For example, the specific time point may be determined based on one or a sum of two or more of PSFCH-to-PSSCH minimum timing (determined based on the UE-B implementation as a sum of PSFCH detection/processing time and a next PSCCH/PSSCH preparation time), T_proc,1 or T_1. As a detailed example, the specific time point may be determined as a time point after T_proc,1 has passed from the slot n. The coordination information may be transmitted in the form of a PSFCH format.

For example, the specific time point may be determined based on one or a sum of two or more among PSSCH-to-PSFCH minimum timing value, T_proc,1, T_1, PSCCH or PSSCH processing type (implementally determined by the UE-B). As a detailed example, the specific time point may be determined as a time point after T_proc,1 has passed from the slot n. The coordination information may be transmitted via PSCCH (e.g., first SCI (1st stage SCI)) and/or PSSCH (e.g., second SCI (2nd stage SCI)). In this case, for example, when the UE-B reselects a previously reserved resource or reselects an additional resource as a compensation for a previously transmitted resource, some of the resources after the specific time has passed from a transmission/reception time point of the coordination information may be selected.

It is necessary to determine in which unit a coordination information-based resource (re)selection procedure is determined, or determine under which conditions a UE capable of transmitting the coordination information and a UE capable of utilizing the coordination information can be used. For example, whether the coordination information-based resource (re)selection procedure is available may be (pre-)determined for each resource pool.

For example, whether the coordination information-based resource (re)selection procedure is available may be configured in the higher layer for each specific unit. The specific unit may be determined based on at least one of a congestion control level, QoS parameter, TB, a logical channel, and/or MAC ENTITY. In this case, for example, the UE may select a resource pool, that can be used as the coordination information in a resource pool selection step and/or a resource selection step, with respect to a logical channel capable of using the coordination information when performing resource (re)selection. For example, if the coordination information is transmitted in the form of a PSFCH format, the UE may select a resource pool in which PSFCH resources (for the purpose of coordination information) are configured in the resource pool selection step.

For example, when the UE-A transmits coordination information to the UE-B after the UE-B sends a request signaling to the UE-A, if SL data is valid/present on the logical channel and/or MAC ENTITY is selected to generate a SELECTED SIDELINK GRANT corresponding to single or multiple MAC PDU transmissions, the UE-B may transmit the request signaling to the UE-A. For example, after SL data is valid/present on the logical channel and/or MAC ENTITY is selected to generate a SELECTED SIDELINK GRANT corresponding to single or multiple MAC PDU transmissions, the UE-B may utilize the coordination information received from the UE-A.

For example, if the request information (i.e., a request for the coordination information) is transmitted via SCI and/or PSSCH, at least one of a source ID, a destination ID, a cast type, a priority value corresponding to it, and/or whether to activate HARQ-ACK, and an option therefor, etc. may be (pre)configured, or may be configured in a process of exchanging information between the UE-B and the UE-A. For example, the source ID may be determined based on UE-B's source ID for transmission data and/or UE-B's destination ID for transmission data. For example, the destination ID may be determined based on UE-B's source ID for transmission data and/or UE-B's destination ID for transmission data.

The UE-A may transmit additional information to the UE-B based on whether a specific event occurs without receiving a request for additional information from the UE-B. In this case, the UE-A may not be provided with information related to the UE-B transmission from the UE-B. For example, the UE-A may use again information on the UE-B transmission obtained most recently from a request of the UE-B when transmitting additional information based on event occurrence. For example, the UE-A may be (pre-)configured with or randomly select the information on the UE-B transmission to generate and transmit additional information to the UE-B. In this case, when all or some of parameters for the UE-B transmission that the UE-A refers to upon generating the additional information do not correspond to the actual UE-B transmission, the UE-B may ignore/skip the additional information upon the resource (re)selection.

For example, the UE-A may assume a packet delay budget (PDB) and/or an end time point of a resource selection window for the UE-B transmission as a (pre)set value (e.g., T_2,min) and generate additional information. For example, when the PDB for the UE-B transmission does not correspond to the additional information transmitted by the UE-A, the UE-B may ignore/skip the additional information of the UE-A.

For example, for the additional information transmitted by the UE-A, when a transmission priority value for the UE-B transmission is not the same as it, or when a value assumed by the UE-A is large, or when a value assumed by the UE-A is small, the UE-B may ignore/skip the additional information of the UE-A.

For example, for the additional information transmitted by the UE-A, when the number of sub-channels for the UE-B transmission is not the same as it, or when a value assumed by the UE-A is large, or when a value assumed by the UE-A is small, the UE-B may ignore/skip the additional information of the UE-A.

For example, for the additional information transmitted by the UE-A, when a resource reservation period for the UE-B transmission is not the same as it, or when a value assumed by the UE-A is large, or when a value assumed by the UE-A is small, or when a value assumed by the UE-A is not a multiple or a divisor of the resource reservation period of the UE-B transmission, the UE-B may ignore/skip the additional information of the UE-A.

If the UE-A recognizes all or part of the indicated resources from a UE-B perspective based on own sensing operation of the UE-B upon providing the UE-B with preferred and/or non-preferred resource information for the UE-B transmission, it can be seen that efficiency of the transmission of the additional information (coordination information) of the UE-A is reduced.

For example, preferred resources and/or non-preferred resources provided by the UE-A to the UE-B have not been observed by the UE-B, but may include one determined based on non-preferred resources observed by the UE-A. For example, the resources may be reserved resource information obtainable from SCI transmitted at a time point when the UE-B performs SL transmission and/or UL transmission or in a time duration overlapping therewith. For example, the UE-A may derive SL reception unavailable slot information of the UE-B based on reserved resources obtained from SCI transmitted by the UE-B, and the UE-A may determine non-preferred resources and/or preferred resources for the UE-B transmission based on information on SCI acquired in all or part of SL reception unavailable slots and/or reserved resources indicated in the acquired SCI.

For example, the reception unavailable slots of the UE-B may be limited to initial transmission of the UE-B. For example, more specifically, the UE-A may distinguish UEs based on L1 or L2 source ID and/or L1 or L2 destination ID of SCI received from the UE-B and may generate non-preferred resources and/or preferred resources for each ID or each ID combination.

For example, the UE-B may establish UE-PAIR with the UE-A via PC5-RRC configuration, and the UE-A may generate non-preferred resources and/or preferred resources for single or multiple source IDs and/or destination IDs of the UE-B.

For example, when the UE-B requests the additional information from the UE-A, the UE-B may include information about SCI detection attempt slots that the UE-A will refer to upon generating the non-preferred resources and/or preferred resources. For example, the UE-A may determine preferred resources and/or non-preferred resources for the UE-B transmission at least using SCI received in the SCI detection slots provided by the UE-B in response to the request signal and/or reserved resource indicated in the SCI.

For example, the preferred resources and/or non-preferred resources provided by the UE-A to the UE-B are not configured as non-preferred resources or resources excluded from available resources as a sensing result of the UE-B, but may be configured as non-preferred resources as a sensing result of the UE-A. For example, when an RSRP measurement value based on PSCCH DMRS and/or PSSCH DMRS received by the UE-A is equal to or greater than or exceeds a first RSRP threshold, and/or is equal to or less than or below a second RSRP threshold, the UE-A may determine a reserved resource indicated in the PSCCH/PSSCH and/or SCI corresponding thereto as a non-preferred resource. As an example, based on the RSRP measurement value being greater than the first RSRP threshold, a reserved resource indicated in the SCI may be determined as a non-preferred resource. As an example, based on the RSRP measurement value being less than the second RSRP threshold, a reserved resource indicated in the SCI may be determined as a non-preferred resource. In this instance, the UE-A may be a receiving UE of the UE-B. That is, the UE-B transmission based on resources reserved by the SCI may be related to the UE-A.

For example, in the above, when the UE-A determines a preferred resource, the UE-A may exclude the non-preferred resource. For example, the first RSRP threshold and/or the second RSRP threshold may be a (pre)set value. For example, the second RSRP threshold may be a value determined in association with the first RSRP threshold. For example, the second RSRP threshold may be a value obtained by adding a (pre)set offset value to the first RSRP threshold. The rationale for this is that if the RSRP measurement value is relatively large from a UE-A perspective, it can already be classified as a non-preferred resource because the RSRP measurement value is high even from a UE-B perspective. In the above case, especially, when the UE-A is a legitimate receiver of the UE-B transmission, the UE-B may avoid unnecessarily using resources with a high interference level. For example, based on whether the UE-A is a receiver (a receiving UE) for TB transmitted by the UE-B, the RSRP measurement value and the threshold may be differently used.

For example, if the UE-A is a receiver for TB transmitted by the UE-B, a resource for the UE-A to receive TB from another UE or a resource expected to receive may be determined as a non-preferred resource based on the following condition i) or ii). Specifically, based on the following condition i) or ii), the corresponding resource may be determined as a non-preferred resource for the UE-B transmission, or a candidate resource overlapping the corresponding resource may be excluded from a preferred resource for the UE-B transmission.

i) if the RSRP measurement value (based on PSCCH DMRS and/or PSSCH DMRS) for the resource is equal to or less than or below the second threshold

ii) if the RSRP measurement value for the resource is equal to or greater than or below the first threshold

For example, if the UE-A is not a receiver for TB transmitted by the UE-B, a resource for the UE-A to receive TB from another UE or a resource expected to receive may be determined as a non-preferred resource based on the following condition i). Specifically, based on the following condition i), the corresponding resource may be determined as a non-preferred resource for the UE-B transmission, or a candidate resource overlapping the corresponding resource may be excluded from a preferred resource for the UE-B transmission.

i) if the RSRP measurement value (based on PSCCH DMRS and/or PSSCH DMRS) for the resource is equal to or less than or below the second threshold

The first RSRP threshold and/or the second RSRP threshold may be determined based on a priority value related to the SCI (among preset values). As an example, the first RSRP threshold (and/or the second RSRP threshold) may be determined as a value corresponding to a value of a priority field included in the SCI among preset values.

For example, the first RSRP threshold may be configured based on a combination of a transmission priority value and a reception priority value. For example, the reception priority value upon determining the first RSRP threshold may be a priority value included in the SCI received by the UE-A. For example, the transmission priority value upon determining the first RSRP threshold may be a value included in an additional information request signal when the UE-A receives the additional information request signal from the UE-B.

For example, the transmission priority value upon determining the first RSRP threshold may be a (pre)set value. For example, the transmission priority value upon determining the first RSRP threshold may be a largest value among priority values configured in a transmission resource pool and/or a reception resource pool of the UE-A. For example, the priority value used upon determining the first RSRP threshold may be a smallest value among priority values configured in a transmission resource pool and/or a reception resource pool of the UE-A. Examples where the transmission priority value is determined as the (pre)set value or a predefined value are as follows. When the UE-A does not receive a request signal from the UE-B, the transmission priority value may be determined as the (pre)set value or the predefined value. Alternatively, when the UE-A receives a request signal from the UE-B and then a PDB for additional information indicated in the request signal passes, the transmission priority value may be determined as the (pre)set value or the predefined value. Alternatively, when transmission of additional information of the UE-A is not based on a request signal, the transmission priority value may be determined as the (pre)set value or the predefined value.

For example, the second RSRP threshold may be configured based on the reception priority value. For example, the reception priority value upon determining the second RSRP threshold may be a priority value included in the SCI received by the UE-A. For example, the second RSRP threshold may be configured based on a combination of the transmission priority value and the reception priority value. For example, the transmission priority value upon determining the second RSRP threshold may be a (pre)set value. For example, the transmission priority value upon determining the second RSRP threshold may be a largest value among priority values configured in a transmission resource pool and/or a reception resource pool of the UE-A. For example, the priority value used upon determining the second RSRP threshold may be a smallest value among priority values configured in a transmission resource pool and/or a reception resource pool of the UE-A.

For example, the UE-A may determine whether a resource for the UE-A to receive TB from another UE or a resource expected to receive is excluded from the preferred resource for the UE-B transmission, and/or is included in the non-preferred resource based on a signal-to-interference ratio (SIR) for the resource. For example, when an SIR for a resource for the UE-A to receive TB from another UE or a resource expected to receive is equal to or less than or below a (pre-)configured threshold, the UE-A may determine the corresponding resource as the non-preferred resource. As an example, the corresponding resource may be included in the non-preferred resource for the UE-B transmission. As an example, a candidate resource overlapping the corresponding resource may be included in the non-preferred resource, or a candidate resource overlapping the corresponding resource may be excluded from the preferred resource.

For example, a numerator value of the SIR measurement may be an RSRP value measured based on PSCCH DMRS and/or PSSCH DMRS (indicating a reserved resource) corresponding to a TB reception resource of the UE-A. For example, a denominator value of the SIR measurement may be an RSRP value measured based on PSCCH DMRS and/or PSSCH DMRS corresponding to an additional information request signal of the UE-B. For example, a denominator value of the SIR measurement may be an RSRP value measured based on PSCCH DMRS and/or PSSCH DMRS corresponding to the SCI previously transmitted by the UE-B.

For example, additional information generated based on a resource for the UE-A to receive TB from another UE or a resource expected to receive may be limited to when the UE-A previously receives PSCCH and/or PSSCH from the UE-B. For example, distinguishing the transmission of the UE-B may be based on a SOURCE ID and/or a DESTINATION ID acquired by the UE-A.

For example, if the UE-A generates additional information based on a resource for the UE-A to receive TB from another UE or a resource expected to receive, the resource may be used to generate the additional information by limiting to when the resource corresponds to initial transmission from a UE-A perspective (to reserved resource derived from resources that the UE-A first receives for the TB even in retransmission resources).

In an embodiment of the present disclosure, a DMRS type used upon the RSRP measurement may be (pre-)configured, or indicated by a request of the UE-B, or determined through a pre-setup process between the UE-A and the UE-B.

In an embodiment of the present disclosure, a resource for which the UE-A expects to receive the TB may refer to a reserved resource derived from a TRIV field value and/or a resource reservation period from the PSCCH/PSSCH after the UE-A recognizes that it is a receiver of a TB through the previous PSCCH/PSSCH reception.

In an embodiment of the present disclosure, the UE-A may be a receiving UE that is a target of transmission of the UE-B. In an embodiment of the present disclosure, the UE-A may be a UE that is not a target of transmission of the UE-B.

The UE-B may receive a preferred resource for UE-B transmission from the UE-A, and may perform a PSCCH/PSSCH transmission on the UE-A or a third UE to which SL DRX is configured. In this case, the UE-B may be required to transmit an initial transmission and/or a partial (re)transmission in a time duration for which drx-OnDuration-Timer-SL of a receiving UE operates, and when a transmission resource is not secured in the time duration, the UE-B may no longer be able to extend ACTIVE TIME, that is a time duration for SCI reception, at a receiving UE end. In the above, drx-OnDurationTimer-SL is a timer that periodically (re)starts based on a (pre)set period, and may be used to determine the time it takes for the UE to minimally detect SCI upon SL DRX operation.

For example, if a receiving UE of the UE-B is the UE-A, the UE-A may determine so that resources within a time duration, for which drx-OnDurationTimer-SL of a receiving UE of UE-B transmission operates, are included at a predetermined level or more when the UE-A determines preferred resources to provide to the UE-B. For example, the predetermined level is a (pre)set value, and may be expressed as the number of PSCCH/PSSCH transmission resources or may be expressed as a ratio of all the preferred resources.

For example, the receiving UE may be limited to the UE-A. For example, if the receiving UE, i.e., the UE-A does not include resources within a time duration, for which drx-OnDurationTimer-SL of the UE-A operates, at a predetermined level or more when the UE-A determines preferred resources, the UE-A may maintain ACTIVE TIME during a specific time duration even after the drx-OnDurationTimer-SL timer expires. For example, the specific time duration may be a (pre)set value. For example, the specific time duration may be extended so that the number of preferred resources determined by the UE-A is equal to or greater than or exceeds a (pre)set number. In this case, for example, if the UE-A is a receiving UE of the UE-B transmission, the UE-B may expect the UE-A to set the ACTIVE TIME in all or part of preferred resources indicated by the UE-A, and the UE-B may be allowed to select a resource for initial transmission from the preferred resources after the drx-OnDurationTimer-SL of the UE-A expires.

For example, when the UE-B receives preferred resources from the UE-A, only if the number of available resources and/or a ratio of available resources to all resources within a resource selection window is equal to or greater than or exceeds a specific threshold within a time duration for which drx-OnDurationTimer-SL of the receiving UE of the UE-B transmission is operating within the preferred resources, the UE-B may use additional information received from the UE-A for resource (re)selection. That is, for example, in the reverse situation of the above situation, the UE-B may omit the additional information received from the UE-A.

For example, when the UE-B receives preferred resources from the UE-A, if the number of available resources and/or a ratio of available resources to all resources within a resource selection window is equal to or less than or below a specific threshold within a time duration for which drx-OnDurationTimer-SL of the receiving UE of the UE-B transmission is operating within the preferred resources, the UE-B may transmit PSCCH/PSSCH to the receiving UE using an EXCEPTIONAL POOL, or may transmit PSCCH/PSSCH to the receiving UE through resources of DEFAULT ON DURATION or transmit information indicating ON DURATON extension of the receiving UE.

It may be considered that the UE-B and the UE-C transmit and receive PSCCH/PSSCH to each other. Upon each PSCCH/PSSCH transmission, each UE may indicate reception preferred resources and/or non-preferred resources of the UE perspective to the receiving UE. For example, when the UE transmits PSCCH/PSSCH, the UE may transmit preferred resources and/or non-preferred resources to the receiving UE via the second SCI or MAC CE from a reception perspective of the UE within a specific time duration determined based on a time point at which PSCCH/PSSCH corresponding thereto is transmitted. For example, when the receiving UE transmits again PSCCH/PSSCH to the transmitting UE, the receiving UE may perform resource (re)selection considering the recently received preferred resources and/or non-preferred resources. For example, a start time point of the specific time duration may start after a slot offset that is (pre-)configured from a PSCCH/PSSCH transmission time point and/or indicated in the additional information. For example, information on preferred resources and/or non-preferred resources within the specific time duration may be expressed in the form of a bitmap. For example, the bitmap may be used to indicate time domain resources (e.g., slots or group of slots). For example, the bitmap may be used to indicate a combination of time domain resources and frequency domain resources (e.g., a combination of slots and sub-channels, or a combination of a slot group and a sub-channel group, or a combination of a slot group and a PRB group, etc.) in two-dimension. For example, a PAYLOAD size used to indicate the preferred resources and/or non-preferred resources may be a (pre)set or predefined value. For example, a length for the specific time duration may be a (pre)set or predefined value. For example, a size of the slot group and/or sub-channel group and/or PRB group may be a value determined implicitly based on a PAYLOAD size for additional information.

For example, when the UE-A expresses the preferred resources and/or non-preferred resources in the bitmap, the UE-B may extend and interpret the preferred resources and/or non-preferred resources in a form in which information indicated in the bitmap is repeated a specific number of times (e.g., a (pre)set value or a value indicated in additional information).

For example, when a set of available resource candidates determined based on the sensing result of the UE-B and the additional information is concentrated in a partial area within the resource selection window, the UE-B may cancel the use of additional information. For example, when the available resource candidates are located at a time point earlier than T2_min (e.g., a minimum size of the resource reselection window or a minimum value at an end time point of the resource selection window from slot N) from a time point of slot N at which resource (re)selection of the UE-B is triggered, the UE-B may cancel the use of additional information. For example, when a difference between an earliest time point and a latest time point of the available resource candidates is equal to or less than or below a specific threshold, the UE-B may cancel the use of additional information. For example, the specific threshold may be a (pre)set value. For example, the specific threshold may be a value determined based on HARQ RTT value and the number of retransmissions or the maximum number of retransmissions.

The embodiment of the present disclosure has described cancelling the use of additional information (coordination information), but the spirit of the present disclosure can be extended and applied to expressing conditions capable of using the additional information (coordination information).

Resources reserved by the UE-B via SCI may overlap non-preferred resources of the UE-B transmission provided by the UE-A. The additional information transmitted by the UE-A may not include the RSRP measurement value and/or priority value for the non-preferred resources. For example, when non-preferred resources received from the UE-A overlap selection resources of the UE-B, the UE-B may report RE-EVALUATION or PRE-EMPTION for the selection resources to the higher layer of the UE-B. For example, the reporting of RE-EVALUATION or PRE-EMPTION determined based on the additional information may be separately distinguished from a report type based on SCI detection. For example, in the above, when the selection resources of the UE-B have been already indicted to SCI, the UE-B may report PRE-EMPTION, and the UE-B may report RE-EVALUTION before the selection resources of the UE-B are indicted to SCI.

In a next-generation system, a (PRE)CONFIGURATON set for saving power consumption may be constructed. For example, configuration of at least one of the following 1) to 7) may be applied to UE operation.

1) In a power saving mode, RSRP measurement is performed based on PSCCH DMRS
2) Second SCI mapping is allowed only in the form that it is FDMed with PSCCH
3) The minimum number of allocation sub-channels is (pre)set
4) Maximum TBS value or MCS value is (pre)set
5) The maximum number of layers is (pre)set
6) Value of PSSCH-TO-PSFCH timing is set to 3
7) PSFCH resource period is set to 4 or 0

For example, when a UE performs SL transmission in part of reserved resources derived from the received SCI and/or when SL HARQ-ACK feedback is activated in the SCI, the UE may transmit NACK using a PSFCH resource corresponding to a PSSCH whose reception is skipped as the SL transmission is performed. For example, the above may be a case where SL HARQ-ACK feedback for the transmission of the UE is deactivated, and/or a case where SL HARQ-ACK feedback indicated by the received SCI is a groupcast OPTION 1 (NACK-ONLY).

If the UE receives ACK for the same TB when the reserved resource is a retransmission resource, the UE may release the reserved retransmission resource. However, other UEs cannot recognize whether to release, and thus regardless of whether the resource is used or not, the resource may be unnecessarily excluded from available resources upon the resource (re)selection. For example, when the UE-A receives ACK for TB transmitted by the UE-A (in case of groupcast, when ACK is received from all the receiving UEs or when ACK is determined), all or part of the reserved reselection resources corresponding thereto may be included in the preferred resources to be transmitted to the UE-B. For example, when the UE-B is indicated by the UE-A that the retransmission resource reserved by the UE-A is a preferred resource, the UE-B may determine/expect that the retransmission resource has been released, and the retransmission resource may be included in the target of available resources. For example, the released reserved retransmission resources may be included again in the available resources based on the sensing result of the UE-B.

When the UE-B receiving a resource conflict indicator performs resource reselection on a reserved resource that has been already indicated via SCI, the UE-B may generate a resource conflict again since the reselection resource is not indicated via SCI. For example, the UE-B receiving a resource conflict indicator may select a resource after reserved resources that the UE-B has already indicated via SCI when reselecting resources, and may again provide updated reserved resource information (which may include the reselected resource) to the receiving UE when the reselected resource transmits the PSCCH/PSSCH in the reserved resource indicated via the SCI. In the above case, it can be seen that there is an advantage in preventing an unnecessary resource conflict by providing information of the reselected resource to the SCI from a resource that has been already known to other UEs. For example, the constraint on the resource capable of resource reselection may be that whether or not to perform the operation may be (pre)configured.

In the case of indicating a resource conflict in the past, the UE-A may instead transmit a NACK to the UE-B based on a PSFCH corresponding to the conflict PSSCH instead of another receiving UE. However, in the above situation, the UE-B may distinguish i) NACK transmission transmitted by the receiving UE after the receiving UE performs SCI detection and ii) the receiving UE not performing SCI detection and the UE-A, that is the third UE, transmitting NACK due to a resource conflict (HALF-DUPLEX).

More specifically, the UE transmitting NACK after the SCI detection may already store a TB for initial transmission in a buffer, and there may be no TB stored in a buffer of a receiving UE in which a resource conflict occurs. In the above situation, a UE first receiving a TB in a retransmission resource after a resource conflict based on an RV value selected by the UE-B may not succeed in decoding only through retransmission. More specifically, when the UE-B performs retransmission using RV 1 or 2, UE(s) storing an encoded TB (the RV value is generally 0 or 3) for initial transmission in a buffer may succeed in TB decoding by CHASE COMBINING. On the other hand, a UE (i.e., a UE first receiving the TB) receiving an encoded TB for RV 1 or 2 due to a resource conflict cannot succeed in decoding and may require additional retransmission again. Hence, the UE-A may transmit a resource conflict indicator using a separate resource (e.g., PSFCH resource or transmission method or separate PSFCH resource for ACK) from a PSFCH resource for general NACK transmission for a resource conflict PSSCH of the UE-B. For example, the UE-A may configured whether to transmit instead a NACK or transmit a resource conflict indicator as a separate PSFCH resource or a state value in the PSFCH resource for SL HARQ-ACK feedback for the resource conflict PSSCH of the UE-B.

For example, when the UE-B receives preferred resource information for UE-B transmission from the UE-A, the UE-B may include, in candidate resources, resources outside the preferred resources in resource (re)selection under a specific situation. For example, the specific situation may be a case where a ratio of the number of preferred resources indicated in the additional information to the total number of resources within the resource selection window of the UE-B is below or equal to or less than a (pre-)configured threshold. For example, the specific situation may be a case where a ratio of the number of slots including preferred resources indicated in the additional information to the number of slots within the resource selection window of the UE-B is below or equal to or less than a (pre-)configured threshold. For example, the specific situation may be a case where a ratio of the number of preferred resources indicated in the additional information to the total number of resources from the start of the resource selection window of the UE-B to T_2,min is below or equal to or less than a (pre-configured threshold. For example, the specific situation may be a case where a ratio of the number of slots including preferred resources indicated in the additional information to the total number of slots from the start of the resource selection window of the UE-B to T_2,min is below or equal to or less than a (pre-)configured threshold. For example, the specific situation may be a case where a ratio of the number of available candidate resources within preferred resources selected based on the sensing result of the UE-B to the total number of preferred resources indicated in the additional information is below or equal to or less than a (pre-)configured threshold.

For example, if the UE-B includes, in the candidate resources, resources outside the preferred resources in resource (re)selection, the UE-B may preferentially use resources of slots including the preferred resources. For example, in the above operation, the preferred resource may be updated in a form in which the resource of the slot including the preferred resource indicated in the additional information is included, and the operation may check again whether the preferred resource is sufficient. For example, if the preferred resources are still insufficient after the above process, a resource of a slot not including the preferred resources indicated in the additional information may be used as a resource candidate upon resource (re)selection of the UE-B.

In an embodiment of the present disclosure, the threshold may be a value set differently for each priority level, or may inherit a minimum value X% of a ratio to available resources.

For example, when the UE-B receives non-preferred resource information for UE-B transmission from the UE-A, the UE-B may include, in candidate resources, resources within the non-preferred resources in resource (re)selection under a specific situation. For example, the specific situation may be a case where a ratio of the number of resources other than non-preferred resources indicated in additional information within the resource selection window to the total number of resources within the resource selection window of the UE-B is below or equal to or less than a (pre-)configured threshold. For example, the specific situation may be a case where a ratio of the number of resources other than non-preferred resources indicated in additional information within the above duration to the total number of resources from the start of the resource selection window of the UE-B to T_2,min is below or equal to or less than a (pre-configured threshold. For example, the specific situation may be to a case where a ratio of the number of available candidate resources selected based on the sensing result of the UE-B to the total number of resources other than non-preferred resources indicated in additional information within the resource selection window is below or equal to or less than a (pre-)configured threshold.

In an embodiment of the present disclosure, the threshold may be a value set differently for each priority level, or may inherit a minimum value X% of a ratio to available resources.

In the next-generation system, preferred resources transmitted by the UE-A to the UE-B may be a set of resources that satisfy all or part of conditions according to Table 12 below.

[Table 12]

| |
|---|
| - *In scheme 1, at least the following is supported to determine inter-UE coordination information of preferred resource set:* |
| • *UE-A considers any resource(s) satisfying all the following condition(s) as set of resource(s) preferred for UE-B's transmission* |
| ✓ *Condition 1-A-1:* |
| > *Resource(s) excluding those overlapping with reserved resource(s) of other UE identified by UE-A whose RSRP measurement is larger than a RSRP threshold* |
| ✓ *Condition 1-A-2:* |
| > *Resource(s) excluding slot(s) where UE-A, when it is intended receiver of UE-B, does not expect to perform SL reception from UE-B due to half duplex operation* |

For example, only if a preferred resource received from other UE-A upon PSCCH/PSSCH resource (re)selection for unicast transmission targeted to the UE-A is determined at least based on Condition 1-A-1, the UE-B may use the preferred resource for the resource (re)selection. For example, in the above, the other UE-A may include, in additional information, whether the resource determined by Condition 1-A-1 is included and/or based on which condition it is determined, when transmitting the preferred resource.

For example, when the number of resources in an intersection of preferred resources receiving from the UEs-A corresponding to a plurality of receiving UEs upon PSCCH/PSSCH resource (re)selection for groupcast and/or broadcast transmission including the UE-A as a target is below or equal to or less than a specific threshold (e.g., a (pre)set value or a value determined based on this), the UE-B may not use the preferred resources received from all or some of the receiving UE(s) in the resource (re)selection process of the UE-B.

In the next-generation system, non-preferred resources transmitted by the UE-A to the UE-B may be a set of resources that satisfy all or part of conditions and/or options of Table 13 below.

[Table 13]

| |
|---|
| - *In scheme 1, at least the following is supported to determine inter-UE coordination information of non-preferred resource set:* |
| • *UE-A considers any resource(s) satisfying at least one of the following condition(s) as set of resource(s) non-preferred for UE-B's transmission* |
| ✓ *Condition 1-B-1:* |
| > *Option 1: Reserved resource(s) of other UE(s) identified by UE-A whose RSRP measurement is larger than a (pre)configured RSRP threshold which is determined by at least priority value indicated by SCI of the UE(s)* |
| > *Option 2: Reserved resource(s) of other UE identified by UE-A whose RSRP measurement is smaller than a (pre)configured RSRP threshold which is determined by at least priority value indicated by SCI of the UE(s) when UE-A is a destination of a TB transmitted by the UE(s)* |
| ✓ *Condition 1-B-2:* |
| > *Resource(s) (e.g., slot(s)) where UE-A, when it is intended receiver of UE-B, does not expect to perform SL reception from UE-B due to half duplex operation* |

For example, only if a non-preferred resource received from other UE-A (not a reception target of the UE-B transmission) upon PSCCH/PSSCH resource (re)selection for unicast and/or groupcast and/or broadcast transmission including the UE-A as a target is determined at least based on Condition 1-B-1 with Option 2 and/or Condition 1-B-1 with Option 1, the UE-B may use the non-preferred resource for the resource (re)selection. For example, in the above, the other UE-A may include, in additional information (coordination information), whether the resource determined by Condition 1-B-1 with Option 2 is included and/or based on which condition and/or option it is determined, when transmitting the non-preferred resource.

In the next-generation system, a resource conflict indicator for UE-B reserved resource(s) transmitted by the UE-A to the UE-B may be a set of resources that satisfy all or part of conditions of Table 14 below.

[Table 14]

| |
|---|
| - In scheme 2, at least the following is supported to determine inter-UE coordination information:<br>• Among resource(s) indicated by UE-B's SCI, UE-A considers that expected/potential resource conflict occurs on the resource(s) satisfying at least one of the following condition(s):<br>✔ Condition 2-A-1:<br>> Other UE's reserved resource(s) identified by UE-A are fully/partially overlapping with resource(s) indicated by UE-B's SCI in time-and-frequency<br>- Option 1:<br>• For the case when UE-A is a destination UE of a TB transmitted by UE-B<br>> The resource(s) are fully/partially overlapping in time-and-frequency with other UE's reserved resource(s) whose RSRP measurement is larger than a RSRP threshold according to the priorities included in the SCI:<br>- prio_TX and prio_RX are the priorities indicated in the SCI making the overlapping reservations for UE-B and other UE respectively<br>• For the case when UE-A is a destination UE of a TB transmitted by another UE<br>> The resource(s) are fully/partially overlapping in time-and-frequency with other UE's reserved resource(s) when RSRP measurement of UE-B's reserved resource is larger than a RSRP threshold according to the priorities included in the SCI:<br>- prio_TX and prio_RX are the priorities indicated in the SCI making the overlapping reservations for other UE and UE-B respectively<br>- Option 4:<br>• For the case when UE-A is a destination UE of a TB transmitted by UE-B<br>> The resource(s) are fully/partially overlapping in time-and-frequency with other UE's reserved resource(s) whose RSRP measurement is larger than a (pre)configured RSRP threshold compared to the RSRP measurement of UE-B's reserved resource.<br>• For the case when UE-A is a destination UE of a TB transmitted by another UE<br>> The resource(s) are fully/partially overlapping in time-and-frequency with other UE's reserved resource(s) when RSRP measurement of UE-B's reserved resource is larger than a (pre)configured RSRP threshold compared to the RSRP measurement of the resource(s).<br>✔ Condition 2-A-2:<br>> Resource(s) (e.g., slot(s)) where UE-A, when it is intended receiver of UE-B, does not expect to perform SL reception from UE-B due to half duplex operation |

In the next-generation system, when the UE-A transmits a resource conflict indicator for UE-B reserved resource(s) to the UE-B, the UE-A may transmit whether a resource conflict occurs in a reserved resource of which UE-B and/or whether a resource conflict indicator is determined based on which condition and/or option by differently configuring a PSFCH resource (PRB and/or M_0 value) used for transmission of the resource conflict indicator and/or a PSFCH value (M_CS).

For example, when the UE-B receives the resource conflict indicator from the plurality of UEs-A, the UE-B may perform a resource reselection on all or part of reserved resources of the UE-B corresponding to the resource conflict indicated together based on the received resource conflict indicator.

For example, when the UE-B receives the resource conflict indicator from the plurality of UEs-A, if the UE-B receives the resource conflict indicator corresponding to Condition 2-A-2 from at least one UE, the UE-B may perform a resource reselection to avoid all resources of slots to which all or part of reserved resources of the UE-B belong.

Various embodiments of the present disclosure may be combined with each other.

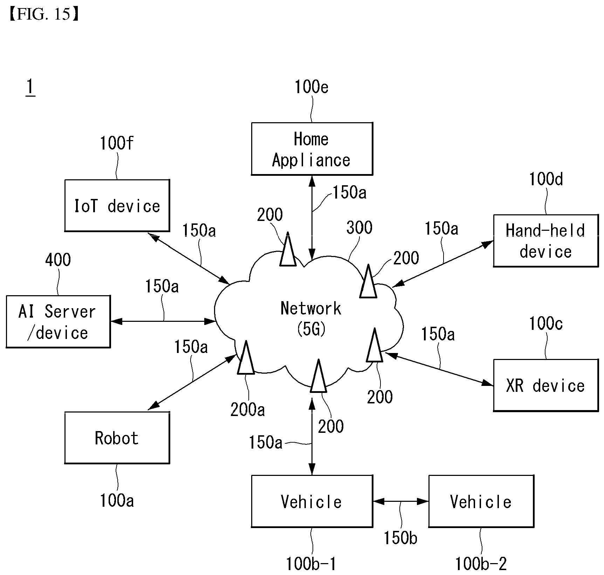

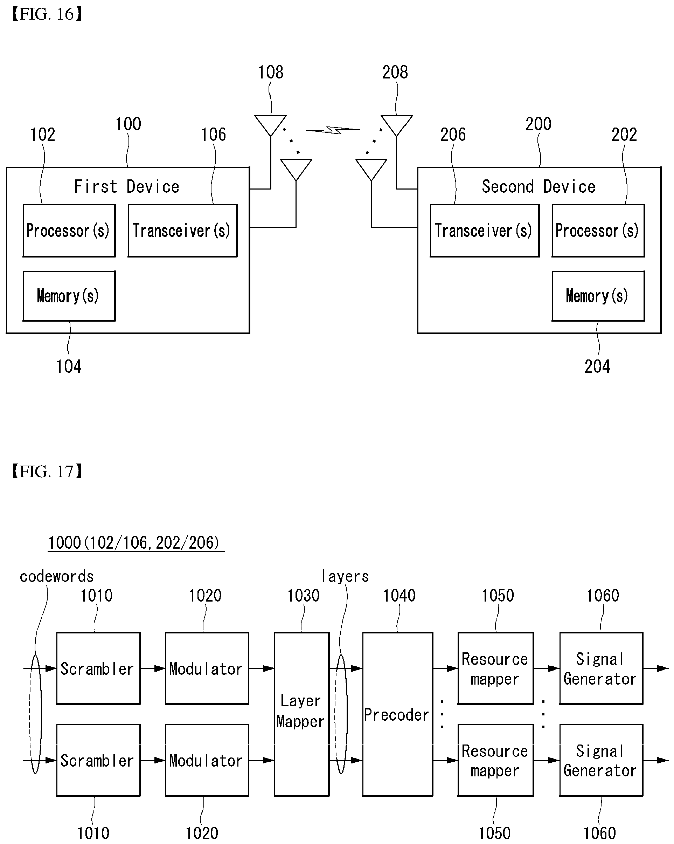

In terms of implementation, the operations (e.g., operations related to the inter-UE coordination) of the first UE (UE-A)/the second UE (UE-B) according to the above-described embodiments may be processed by apparatuses (e.g., processors 102 and 202 in FIG. 16) in FIGS. 15 to 20 to be described below.

Further, the operations (e.g., operations related to the inter-UE coordination) of the first UE (UE-A)/the second UE (UE-B) according to the above-described embodiment may be stored in memories (e.g., one or more memories 104 and 204 in FIG. 16) in the form of a command/program (e.g., instruction or executable code) for driving at least one processor (e.g., 102 and 202 in FIG. 16).

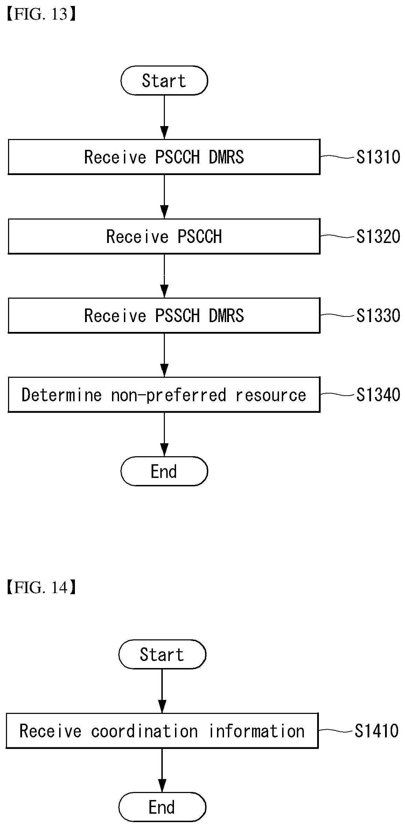

Hereinafter, the above-described embodiments will be described in detail with reference to FIG. 13 in terms of the operation of the first UE. Methods to be described below are just distinguished for convenience and it is needless to say that some components of any one method may be substituted with some components of another method or may be applied in combination with each other unless excluded from each other.

FIG. 13 is a flow chart illustrating a method for a first UE to determine a non-preferred resource in a wireless communication system according to an embodiment of the present disclosure.

Referring to FIG. 13, a method for a first UE to determine a non-preferred resource in a wireless communication system according to an embodiment of the present disclosure may comprise a step S 1310 of receiving a PSCCH DMRS, a step S 1320 of receiving a PSCCH, a step S 1330 of receiving a PSSCH DMRS, and a step S 1340 of determining a non-preferred resource.

In the following description, the first UE may mean the UE-A of FIG. 12, and a second UE may mean the UE-B of FIG. 12. As an example, the first UE may be a UE that transmits coordination information to the second UE, and the second UE may be a UE that receives the coordination information from the first UE. A third UE may be a UE that transmits sidelink control information (e.g., 1st stage SCI) related to the generation of the coordination information to the first UE. The third UE may include one or more UEs (other UE(s)) different from the second UE. The coordination information may mean additional information or assistance information in the above-described embodiment.

In S1310, the first UE receives a demodulation reference signal for physical sidelink control channel (PSCCH DMRS) from the third UE. The first UE may calculate a reference signal received power (RSRP) based on a measurement for the PSCCH DMRS.

According to the step S1310, an operation of the first UE (100/200 of FIGS. 15 to 20) to receive the demodulation reference signal for physical sidelink control channel (PSCCH DMRS) from the third UE (100/200 of FIGS. 15 to 20) may be implemented by a device of FIGS. 15 to 20. For example, referring to FIG. 16, one or more processors 102 may control one or more transceivers 106 and/or one or more memories 104 so as to receive the PSCCH DMRS from the third UE 200.

In S1320, the first UE receives the PSCCH from the third UE.

According to an embodiment, one or more resources may be determined based on sidelink control information (SCI) related to the PSCCH.

Specifically, sidelink control information (SCI) may be transmitted via the PSCCH. The SCI may be based on SCI format 1A (1st stage SCI) of Table 6. The one or more resources may be determined based on the SCI (e.g., resource reservation period field). For example, the first UE may receive the PSSCH DMRS based on the SCI (e.g., DMRS pattern field).

According to the step S1320, an operation of the first UE (100/200 of FIGS. 15 to 20) to receive the PSCCH from the third UE (100/200 of FIGS. 15 to 20) may be implemented by the device of FIGS. 15 to 20. For example, referring to FIG. 16, one or more processors 102 may control one or more transceivers 106 and/or one or more memories 104 so as to receive the PSCCH from the third UE 200.

In S 1330, the first UE receives a demodulation reference signal for physical sidelink shared channel (PSSCH DMRS) from the third UE. The first UE may calculate the RSRP based on a measurement for the PSSCH DMRS.

According to the step S1330, an operation of the first UE (100/200 of FIGS. 15 to 20) to receive the demodulation reference signal for physical sidelink shared channel (PSSCH DMRS) from the third UE (100/200 of FIGS. 15 to 20) may be implemented by the device of FIGS. 15 to 20. For example, referring to FIG. 16, one or more processors 102 may control one or more transceivers 106 and/or one or more memories 104 so as to receive the PSSCH DMRS from the third UE 200.

In S1340, the first UE determines a non-preferred resource related to a transmission of the second UE based on a measurement for at least one of the PSCCH DMRS and/or the PSSCH DMRS.

The one or more resources may be determined as a non-preferred resource based on at least one of the embodiments described above with reference to FIG. 12.

According to an embodiment, the one or more resources may be determined as the non-preferred resource based on i) a reference signal received power (RSRP) based on the measurement and ii) one or more RSRP thresholds.

According to an embodiment, the one or more RSRP thresholds may include a first RSRP threshold and a second RSRP threshold. Each of the first RSRP threshold and the second RSRP threshold may be separately configured/determined.

As an example, based on the first UE being a receiving UE related to the one or more resources, the one or more resources may be determined as the non-preferred resource based on the RSRP and the second RSRP threshold. Specifically, based on the RSRP being less than the second RSRP threshold, the one or more resources may be determined as the non-preferred resource. For the RSRP less than a predetermined value, transmission of the third UE related to the one or more resources may be more affected by interference (e.g., transmission of the second UE (UE-B)). Thus, from a perspective of protecting reception of the first UE (UE-A) (i.e., transmission of the third UE), the one or more resources may be determined as the non-preferred resource related to the transmission of the second UE (UE-B).

As an example, based on the first UE being different from the receiving UE, the one or more resources may be determined as the non-preferred resource based on the RSRP and the first RSRP threshold. Specifically, based on the RSRP being greater than the first RSRP threshold, the one or more resources may be determined as the non-preferred resource. From the RSRP measured (calculated) by the first UE, if interference to the transmission of the second UE (UE-B) is expected to be large, transmission in the corresponding resource (i.e., transmission of the UE-B) needs to be avoided. Thus, the one or more resources may be determined as the non-preferred resource related to the transmission of the second UE (UE-B).

According to an embodiment, information for the RSRP threshold for determining the non-preferred resource may be based on pre-configured information. Specifically, information for the RSRP threshold for determining the non-preferred resource may be pre-configured or configured by a base station.

As an example, information for the RSRP threshold for determining the non-preferred resource may be configured to the first UE by the base station. For example, information for the RSRP threshold for determining the non-preferred resource may be information defined/configured (upon the UE implementation). The present embodiment may be based on embodiments related to the above-described '(pre-)configured threshold'.

Information for the RSRP threshold for determining the non-preferred resource (e.g., sl-ThresholdRSRP-Condition1-B-1-Option1List/s1-ThresholdRSRP-Condition1-B-1-Option2List) may include a plurality of RSRP thresholds. That is, the first RSRP threshold and/or the second RSRP threshold among the pre-configured RSRP thresholds may be determined. This is described below in detail.

According to an embodiment, the plurality of RSRP thresholds may include first values and/or second values. The first values (e.g., sl-ThresholdRSRP-Condition1-B-1-Option1List) may be related to the first RSRP threshold. The second values (e.g., sl-ThresholdRSRP-Condition1-B-1-Option2List) may be related to the second RSRP threshold.

Based on the plurality of RSRP thresholds (first values and/or second values) and a value of a priority field of SCI (SCI format 1A) received by the first UE, the first RSRP threshold or the second RSRP threshold may be determined. As an example, based on the first values and the value of the priority field of the SCI, the first RSRP threshold may be determined. Based on the second values and the value of the priority field of the SCI, the second RSRP threshold may be determined.

According to an embodiment, the first RSRP threshold and the second RSRP threshold may be determined based on a priority value. Specifically, based on the value of the priority field included in the SCI, the first RSRP threshold or the second RSRP threshold may be determined.

The above-described examples may be an example of configuration information according to embodiments disclosed in the present disclosure. The information for the RSRP threshold for determining the non-preferred resource may include configuration (e.g., configuration related to inter-UE coordination, SL-InterUE-CoordinationConfig) related to transmission and reception of assistance information (resource conflict indicator, preferred and/or non-preferred resources) according to the above-described embodiment (FIG. 12). The information for the RSRP threshold for determining the non-preferred resource may be referred to as configuration information related to inter-UE coordination. In this case, the configuration information related to the inter-UE coordination may include i) configuration related to the resource conflict indicator and ii) configuration related to the preferred/non-preferred resources.

According to the step S1340, an operation of the first UE (100/200 of FIGS. 15 to 20) to determine the non-preferred resource related to the transmission of the second UE based on the measurement for at least one of the PSCCH DMRS and/or the PSSCH DMRS may be implemented by the device of FIGS. 15 to 20. For example, referring to FIG. 16, one or more processors 102 may control one or more transceivers 106 and/or one or more memories 104 so as to determine the non-preferred resource related to the transmission of the second UE based on the measurement for at least one of the PSCCH DMRS and/or the PSSCH DMRS.

The method may further comprise a step of transmitting coordination information.

In the step of transmitting the coordination information, the first UE may transmit the coordination information representing the non-preferred resource to the second UE. According to an embodiment, the non-preferred resource may include a resource determined as the non-preferred resource based on at least one of the first RSRP threshold and/or the second RSRP threshold. As an example, the non-preferred resource may include a resource determined as the non-preferred resource based on the first RSRP threshold. The corresponding example corresponds to a case where the first UE is not a receiving UE of the third UE. As an example, the non-preferred resource may include a resource determined as the non-preferred resource based on the second RSRP threshold. The corresponding example corresponds to a case where the first UE is a receiving UE of the third UE. As an example, the non-preferred resource may include a resource determined as the non-preferred resource based on the first RSRP threshold and a resource determined as the non-preferred resource based on the second RSRP threshold. The corresponding example corresponds to a case where the first UE receives PSCCH (SCI) from the plurality of third UEs (e.g., UE 3-1, UE 3-2). In this instance, the first UE may be a receiving UE related to the UE 3-1 and may not be a receiving UE related to the UE 3-2. Thus, the non-preferred resource may include a resource determined as the non-preferred resource based on the first RSRP threshold (a resource reserved via SCI received from the UE 3-2) and a resource determined as the non-preferred resource based on the second RSRP threshold (a resource reserved via SCI received from the UE 3-1).

According to an embodiment, the coordination information may be transmitted via a physical sidelink shared channel (PSSCH). The transmission of the coordination information may be triggered based on i) a predefined condition or ii) a request related to the coordination information.

The predefined condition may be related to the above-described specific event. As an example, based on the predefined condition being satisfied (occurrence of the specific event), the first UE may transmit the coordination information to the second UE. That is, the transmission of the coordination information according to the present embodiment may be based on the transmission of assistance information based on event occurrence described above with reference to FIG. 12.

Based on the request related to the coordination information being received from the second UE, the first UE may transmit the coordination information to the second UE. The request related to the coordination information may be based on an embodiment related to at least one of a request signal (a signal requesting the coordination information) described above with reference to FIG. 12, request signaling, a request for assistance information, and/or request information.

According to an embodiment, the coordination information may be based on second stage SCI and/or medium access control-control element (MAC-CE). As an example, the coordination information may be included in the second stage SCI. The first UE may transmit the second stage SCI to the second UE. As an example, the coordination information may be included in the MAC-CE (e.g., inter-UE coordination information MAC CE). The first UE may transmit the MAC-CE to the second UE.

A processing time T_proc,0 or T_0 (a value with T_proc,0 as an upper limit) may be required for the first UE to generate sensing information. A minimum processing time T_proc,1 or T_1 (a value with T_proc,1 as an upper limit) may be required for the first UE to perform resource (re)selection and determine resources. Considering the processing time of the first UE, information for generating the coordination information may be limited to what was obtained prior to a predefined time point (a specific time point according to the above-described embodiment). This is described in detail below.

According to an embodiment, the information (the SCI) for generating the coordination information may be received within a predefined time window. That is, the SCI may be received prior to a predefined time point.

As an example, the predefined time point may be determined based on a transmission time point of the coordination information and the processing time (at least one of T_proc,0, T_0, T_proc,1 and/or T_1) of the first UE. As a detailed example, the predefined time point may be determined as a time point prior to T_proc,0 from the transmission time point (slot) of the coordination information.

As an example, the predefined time point may be determined based on at least one of i) T_proc,0, ii) T_0, iii) T_proc,1, iv) T_1 and/or v) PSSCH-to-PSFCH minimum timing value. As a detailed example, the predefined time point may be determined as a time point prior to a value determined based on at least one of i) T_proc,0, ii) T_0, iii) T_proc,1, iv) T_1 and/or v) PSSCH-to-PSFCH minimum timing value from the transmission time point (slot) of the coordination information.

As an example, the predefined time point may be determined based on a value with T_proc,0, T_0, T_proc,0+T_proc,1, T_0+T_proc,1, T_0+T_1, or T_proc,0+T_proc,1 as an upper limit. As a detailed example, the predefined time point may be determined as a time point prior to T_0+T_proc,1 from the transmission time point (slot) of the coordination information.

According to the above-described step, an operation of the first UE (100/200 of FIGS. 15 to 20) to transmit the coordination information representing the non-preferred resource to the second UE (100/200 of FIGS. 15 to 20) may be implemented by the device of FIGS. 15 to 20. For example, referring to FIG. 16, one or more processors 102 may control one or more transceivers 106 and/or one or more memories 104 so as to transmit the coordination information representing the non-preferred resource to the second UE 200.

Hereinafter, the above-described embodiments will be described in detail with reference to FIG. 14 in terms of the operation of the second UE. Methods to be described below are just distinguished for convenience and it is needless to say that some components of any one method may be substituted with some components of another method or may be applied in combination with each other unless excluded from each other.

FIG. 14 is a flow chart illustrating a method for a second UE to receive coordination information in a wireless communication system according to another embodiment of the present disclosure.

Referring to FIG. 14, a method for a second UE to receive coordination information in a wireless communication system according to another embodiment of the present disclosure may comprise a step S 1410 of receiving coordination information

In the following description, the second UE may mean the UE-B of FIG. 12, and a first UE may mean the UE-A of FIG. 12. As an example, the second UE may be a UE that receives coordination information from the first UE, and the first UE may be a UE that transmits the coordination information to the second UE. A third UE may be a UE that transmits sidelink control information (e.g., 1st stage SCI) related to the generation of the coordination information to the first UE. The third UE may include one or more UEs (other UE(s)) different from the second UE. The coordination information may mean additional information or assistance information in the above-described embodiment.

In S1410, the second UE receives the coordination information from the first UE.

The coordination information may represent a non-preferred resource related to a transmission of the second UE.

According to an embodiment, the coordination information may be received via a physical sidelink shared channel (PSSCH).

According to an embodiment, the coordination information may be based on second stage SCI and/or medium access control-control element (MAC-CE). As an example, the coordination information may be included in the second stage SCI. The second UE may receive the second stage SCI from the first UE. As an example, the coordination information may be included in the MAC-CE (e.g., inter-UE coordination information MAC CE). The second UE may receive the MAC-CE from the first UE.

The non-preferred resource may be determined based on signaling between the first UE and the third UE. This is described in detail below.

The first UE receives a demodulation reference signal for physical sidelink control channel (PSCCH DMRS) from the third UE. The first UE may calculate a reference signal received power (RSRP) based on a measurement for the PSCCH DMRS.

The first UE receives the PSCCH from the third UE. According to an embodiment, one or more resources may be determined based on sidelink control information (SCI) related to the PSCCH. Specifically, sidelink control information (SCI) may be transmitted via the PSCCH. The SCI may be based on SCI format 1A (1st stage SCI) of Table 6. The one or more resources may be determined based on the SCI (e.g., resource reservation period field). For example, the first UE may receive the PSSCH DMRS based on the SCI (e.g., DMRS pattern field).

The first UE receives a demodulation reference signal for physical sidelink shared channel (PSSCH DMRS) from the third UE. The first UE may calculate the RSRP based on a measurement for the PSSCH DMRS.

The non-preferred resource may be determined based on a measurement for at least one of the PSCCH DMRS and/or the PSSCH DMRS. As described above, the PSCCH DMRS and the PSSCH DMRS are transmitted to the first UE from the third UE. In this instance, the one or more resources may be determined based on sidelink control information (SCI) related to the PSCCH.

The one or more resources may be determined as a non-preferred resource based on at least one of the embodiments described above with reference to FIG. 12.

According to an embodiment, the one or more resources may be determined as the non-preferred resource based on i) a reference signal received power (RSRP) based on the measurement and ii) one or more RSRP thresholds.

According to an embodiment, the one or more RSRP thresholds may include a first RSRP threshold and a second RSRP threshold. Each of the first RSRP threshold and the second RSRP threshold may be separately configured/determined.

As an example, based on the first UE being a receiving UE related to the one or more resources, the one or more resources may be determined as the non-preferred resource based on the RSRP and the second RSRP threshold. Specifically, based on the RSRP being less than the second RSRP threshold, the one or more resources may be determined as the non-preferred resource. For the RSRP less than a predetermined value, transmission of the third UE related to the one or more resources may be more affected by interference (e.g., transmission of the second UE (UE-B)). Thus, from a perspective of protecting reception of the first UE (UE-A) (i.e., transmission of the third UE), the one or more resources may be determined as the non-preferred resource related to the transmission of the second UE (UE-B).

As an example, based on the first UE being different from the receiving UE, the one or more resources may be determined as the non-preferred resource based on the RSRP and the first RSRP threshold. Specifically, based on the RSRP being greater than the first RSRP threshold, the one or more resources may be determined as the non-preferred resource. From the RSRP measured (calculated) by the first UE, if interference to the transmission of the second UE (UE-B) is expected to be large, transmission in the corresponding resource (i.e., transmission of the UE-B) needs to be avoided. Thus, the one or more resources may be determined as the non-preferred resource related to the transmission of the second UE (UE-B).

According to an embodiment, the non-preferred resource may include a resource determined as the non-preferred resource based on at least one of the first RSRP threshold and/or the second RSRP threshold. As an example, the non-preferred resource may include a resource determined as the non-preferred resource based on the first RSRP threshold. The corresponding example corresponds to a case where the first UE is not a receiving UE of the third UE. As an example, the non-preferred resource may include a resource determined as the non-preferred resource based on the second RSRP threshold. The corresponding example corresponds to a case where the first UE is a receiving UE of the third UE. As an example, the non-preferred resource may include a resource determined as the non-preferred resource based on the first RSRP threshold and a resource determined as the non-preferred resource based on the second RSRP threshold. The corresponding example corresponds to a case where the first UE receives PSCCH (SCI) from the plurality of third UEs (e.g., UE 3-1, UE 3-2). In this instance, the first UE may be a receiving UE related to the UE 3-1 and may not be a receiving UE related to the UE 3-2. Thus, the non-preferred resource may include a resource determined as the non-preferred resource based on the first RSRP threshold (a resource reserved via SCI received from the UE 3-2) and a resource determined as the non-preferred resource based on the second RSRP threshold (a resource reserved via SCI received from the UE 3-1).

According to an embodiment, information for the RSRP threshold for determining the non-preferred resource may be based on pre-configured information. Specifically, information for the RSRP threshold for determining the non-preferred resource may be pre-configured or configured by a base station.

As an example, information for the RSRP threshold for determining the non-preferred resource may be configured to the first UE by the base station. For example, information for the RSRP threshold for determining the non-preferred resource may be information defined/configured (upon the UE implementation). The present embodiment may be based on embodiments related to the above-described '(pre-)configured threshold'.

Information for the RSRP threshold for determining the non-preferred resource (e.g., sl-ThresholdRSRP-Condition1-B-1-Option1List/sl-ThresholdRSRP-Condition1-B-1-Option2List) may include a plurality of RSRP thresholds. That is, the first RSRP threshold and/or the second RSRP threshold among the pre-configured RSRP thresholds may be determined. This is described below in detail.

According to an embodiment, the plurality of RSRP thresholds may include first values and/or second values. The first values (e.g., sl-ThresholdRSRP-Condition1-B-1-Option1List) may be related to the first RSRP threshold. The second values (e.g., sl-ThresholdRSRP-Condition1-B-1-Option2List) may be related to the second RSRP threshold.

Based on the plurality of RSRP thresholds (first values and/or second values) and a value of a priority field of SCI (SCI format 1A) received by the first UE, the first RSRP threshold or the second RSRP threshold may be determined. As an example, based on the first values and the value of the priority field of the SCI, the first RSRP threshold may be determined. Based on the second values and the value of the priority field of the SCI, the second RSRP threshold may be determined.

According to an embodiment, the first RSRP threshold and the second RSRP threshold may be determined based on a priority value. Specifically, based on the value of the priority field included in the SCI, the first RSRP threshold or the second RSRP threshold may be determined.

The above-described examples may be an example of configuration information according to embodiments disclosed in the present disclosure. The information for the RSRP threshold for determining the non-preferred resource may include configuration (e.g., configuration related to inter-UE coordination, SL-InterUE-CoordinationConfig) related to transmission and reception of assistance information (resource conflict indicator, preferred and/or non-preferred resources) according to the above-described embodiment (FIG. 12). The information for the RSRP threshold for determining the non-preferred resource may be referred to as configuration information related to inter-UE coordination. In this case, the configuration information related to the inter-UE coordination may include i) configuration related to the resource conflict indicator and ii) configuration related to the preferred/non-preferred resources.

A processing time T_proc,0 or T_0 (a value with T_proc,0 as an upper limit) may be required for the first UE to generate sensing information. A minimum processing time T_proc,1 or T_1 (a value with T_proc,1 as an upper limit) may be required for the first UE to perform resource (re)selection and determine resources. Considering the processing time of the first UE, information for generating the coordination information may be limited to what was obtained prior to a predefined time point (a specific time point according to the above-described embodiment). This is described in detail below.

According to an embodiment, the information (the SCI) for generating the coordination information may be received within a predefined time window. That is, the SCI may be received prior to a predefined time point.

As an example, the predefined time point may be determined based on a transmission time point of the coordination information and the processing time (at least one of T_proc,0, T_0, T_proc,1 and/or T_1) of the first UE. As a detailed example, the predefined time point may be determined as a time point prior to the T_proc,0 from the transmission time point (slot) of the coordination information.

As an example, the predefined time point may be determined based on at least one of i) T_proc,0, ii) T_0, iii) T_proc,1, iv) T_1 and/or v) PSSCH-to-PSFCH minimum timing value. As a detailed example, the predefined time point may be determined as a time point prior to a value determined based on at least one of i) T_proc,0, ii) T_0, iii) T_proc,1, iv) T_1 and/or v) PSSCH-to-PSFCH minimum timing value from the transmission time point (slot) of the coordination information.

As an example, the predefined time point may be determined based on a value with T_proc,0, T_0, T_proc,0+T_proc,1, T_0+T_proc,1, T_0+T_1, or T_proc,0+T_proc,1 as an upper limit. As a detailed example, the predefined time point may be determined as a time point prior to T_0+T_proc,1 from the transmission time point (slot) of the coordination information.

According to the step S1410, an operation of the second UE (100/200 of FIGS. 15 to 20) to receive the coordination information from the first UE (100/200 of FIGS. 15 to 20) may be implemented by the device of FIGS. 15 to 20. For example, referring to FIG. 16, one or more processors 202 may control one or more transceivers 206 and/or one or more memories 204 so as to receive the coordination information from the first UE 100.

The transmission of the coordination information by the first UE may be triggered based on i) a predefined condition or ii) a request related to the coordination information.

The predefined condition may be related to the above-described specific event. As an example, based on the predefined condition related to the first UE being satisfied (occurrence of the specific event related to the first UE), the second UE may receive the coordination information from the first UE. That is, the reception of the coordination information according to the present embodiment may be based on the transmission of assistance information based on event occurrence described above with reference to FIG. 12.

According to an embodiment, the transmission of the coordination information by the first UE may be triggered based on a request related to the coordination information.

The method may further comprise a step of transmitting a request related to the coordination information before the step S 1410.

In the step of transmitting the request related to the coordination information, the second UE may transmit the request related to the coordination information to the first UE. Based on the request related to the coordination information, the first UE may transmit the coordination information to the second UE. The request related to the coordination information may be based on an embodiment related to at least one of a request signal (a signal requesting the coordination information) described above with reference to FIG. 12, request signaling, a request for assistance information, and/or request information.

According to the above-described step, an operation of the second UE (100/200 of FIGS. 15 to 20) to transmit the request related to the coordination information to the first UE (100/200 of FIGS. 15 to 20) may be implemented by the device of FIGS. 15 to 20. For example, referring to FIG. 16, one or more processors 202 may control one or more transceivers 206 and/or one or more memories 204 so as to transmit the request related to the coordination information to the first UE 100.

According to an embodiment, the method may further comprise a resource selection step.

In the resource selection step, the second UE may determine resource(s) (e.g., resource(s) related to resource allocation mode 2) for transmission of the PSSCH based on the coordination information.

Specifically, the second UE may exclude a resource overlapping the non-preferred resource in a resource selection window from the resource for transmission of the PSSCH. The second UE may transmit the PSSCH based on the determined resource(s). As an example, a receiving UE related to transmission of the PSSCH may be the first UE. As an example, the receiving UE related to transmission of the PSSCH may be a UE different from the first UE.

According to the above-described step, an operation of the second UE (100/200 of FIGS. 15 to 20) to determine the resource for transmission of the PSSCH based on the coordination information may be implemented by the device of FIGS. 15 to 20. For example, referring to FIG. 16, one or more processors 202 may control one or more transceivers 206 and/or one or more memories 204 so as to determine the resource for transmission of the PSSCH based on the coordination information.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

FIG. 15 shows a communication system 1 based on an embodiment of the present disclosure.

Referring to FIG. 15, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 16 shows wireless devices based on an embodiment of the present disclosure.

Referring to FIG. 16, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 15.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s).

In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) based on the descriptions, functions, procedures, proposals, methods, and/or operational flowcharts disclosed in this document. The one or more processors 102 and 202 may generate messages, control information, data, or information based on the descriptions, functions, procedures, proposals, methods, and/or operational flowcharts disclosed in this document. The one or more processors 102 and 202 may generate signals (e.g., baseband signals) including PDUs, SDUs, messages, control information, data, or information based on the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information based on the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 17 shows a signal process circuit for a transmission signal based on an embodiment of the present disclosure.

Referring to FIG. 17, a signal processing circuit 1000 may include scramblers 1010, modulators 1020, a layer mapper 1030, a precoder 1040, resource mappers 1050, and signal generators 1060. An operation/function of FIG. 17 may be performed, without being limited to, the processors 102 and 202 and/or the transceivers 106 and 206 of FIG. 16. Hardware elements of FIG. 17 may be implemented by the processors 102 and 202 and/or the transceivers 106 and 206 of FIG. 16. For example, blocks 1010 to 1060 may be implemented by the processors 102 and 202 of FIG. 16. Alternatively, the blocks 1010 to 1050 may be implemented by the processors 102 and 202 of FIG. 16 and the block 1060 may be implemented by the transceivers 106 and 206 of FIG. 16.

Codewords may be converted into radio signals via the signal processing circuit 1000 of FIG. 17. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 17. For example, the wireless devices (e.g., 100 and 200 of FIG. 16) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

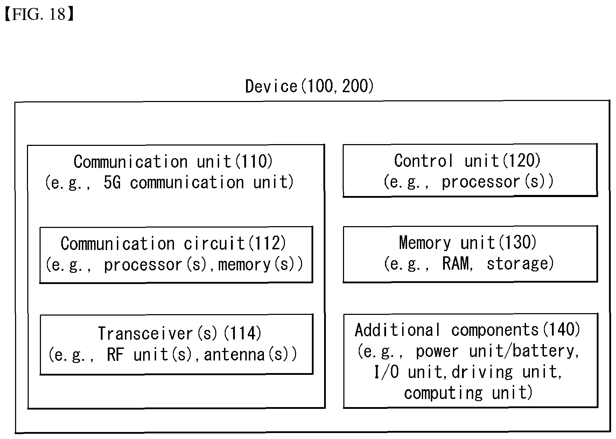

FIG. 18 shows another example of a wireless device based on an embodiment of the present disclosure. The wireless device may be implemented in various forms based on a usecase/service (refer to FIG. 15).

Referring to FIG. 18, wireless devices 100 and 200 may correspond to the wireless devices 100 and 200 of FIG. 16 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 16. For example, the transceiver(s) 114 may include the one or more transceivers 106 and 206 and/or the one or more antennas 108 and 208 of FIG. 16. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured based on types of wireless devices. For example, the additional components 140 may include at least one of a power unit/battery, input/output (I/O) unit, a driving unit, and a computing unit. The wireless device may be implemented in the form of, without being limited to, the robot (100a of FIG. 15), the vehicles (100b-1 and 100b-2 of FIG. 15), the XR device (100c of FIG. 15), the hand-held device (100d of FIG. 15), the home appliance (100e of FIG. 15), the IoT device (100f of FIG. 15), a digital broadcast terminal, a hologram device, a public safety device, an MTC device, a medicine device, a fintech device (or a finance device), a security device, a climate/environment device, the AI server/device (400 of FIG. 15), the BSs (200 of FIG. 15), a network node, etc. The wireless device may be used in a mobile or fixed place based on a use-example/service.

In FIG. 18, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 18 will be described in detail with reference to the drawings.

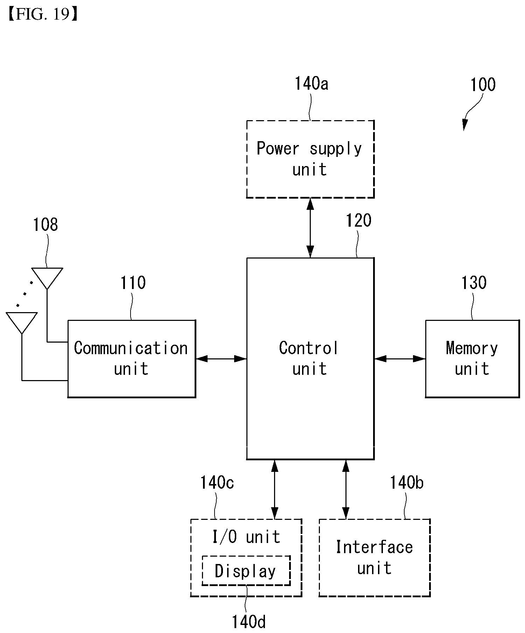

FIG. 19 shows a hand-held device based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT).

Referring to FIG. 19, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 18, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

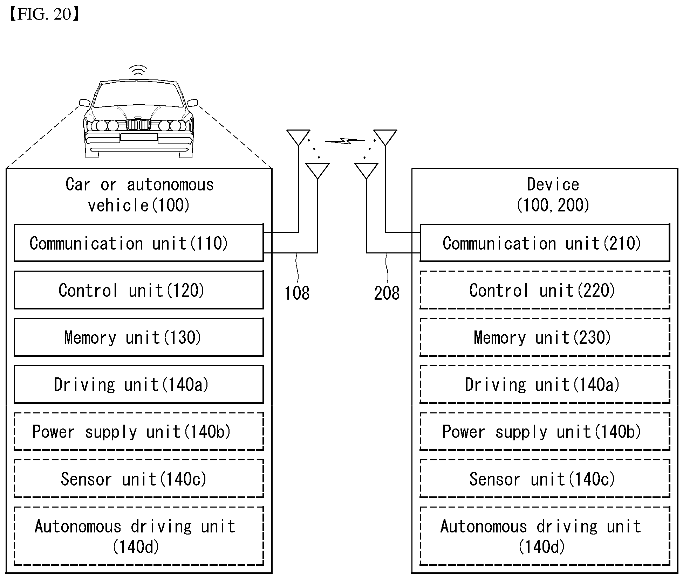

FIG. 20 shows a vehicle or an autonomous vehicle based on an embodiment of the present disclosure. The vehicle or autonomous vehicle may be implemented by a mobile robot, a car, a train, a manned/unmanned Aerial Vehicle (AV), a ship, etc.

Referring to FIG. 20, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 18, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path based on the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims described in the present disclosure can be combined in a various way. For instance, technical features in method claims of the present disclosure can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

**Claims**

1.  A method of a first user equipment (UE) for determining a non-preferred resource in a wireless communication system, the method comprising:

    receiving, from a third UE, a DeModulation Reference Signal for a Physical Sidelink Control Channel (PSCCH DMRS);
    receiving, from the third UE, the PSCCH;
    receiving, from the third UE, a DeModulation Reference Signal for a Physical Sidelink Shared channel (PSSCH DMRS);
    determining a non-preferred resource related to transmission of a second UE based on a measurement for at least one of the PSCCH DMRS and/or the PSSCH DMRS; and
    transmitting, to the second UE, coordination information representing the non-preferred resource,
    wherein the coordination information is transmitted via a Physical Sidelink Shared channel (PSSCH),
    wherein one or more resources are determined based on Sidelink Control Information (SCI) related to the PSCCH, and
    wherein the one or more resources are determined as the non-preferred resource based on i) a reference signal received power (RSRP) based on the measurement and ii) one or more RSRP thresholds.

2.  The method of claim 1, wherein the one or more RSRP thresholds include a first RSRP threshold and a second RSRP threshold.

3.  The method of claim 2, wherein, based on the first UE being a receiving UE related to the one or more resources, the one or more resources are determined as the non-preferred resource based on the RSRP and the second RSRP threshold.

4.  The method of claim 3, wherein, based on the RSRP being lower than the second RSRP threshold, the one or more resources are determined as the non-preferred resource.

5.  The method of claim 3, wherein, based on the first UE being different from the receiving UE, the one or more resources are determined as the non-preferred resource based on the RSRP and the first RSRP threshold.

6.  The method of claim 5, wherein, based on the RSRP being higher than the first RSRP threshold, the one or more resources are determined as the non-preferred resource.

7. The method of claim 1, wherein information for RSRP threshold for determining the non-preferred resource is preconfigured or configured by a base station.

8. The method of claim 2, wherein the first RSRP threshold or the second RSRP threshold is determined based on a value of a priority field included in the SCI.

9. The method of claim 1, wherein the transmission of the coordination information is triggered based on i) a predefined condition or ii) a request related to the coordination information.

10. The method of claim 1, wherein the coordination information is based on a second stage SCI or a Medium Access Control-Control Element (MAC-CE).

11. The method of claim 1, wherein the SCI is received prior to a predefined time point, and wherein the predefined time point is determined based on a transmission time point of the coordination information and a processing time of the first UE.

12. A first user equipment (UE) determining a non-preferred resource in a wireless communication system, the first UE comprising:

> one or more transceivers;
> one or more processors configured to control the one or more transceivers; and
> one or more memories operably connected to the one or more processors,
> wherein the one or more memories are configured to store instructions performing operations based on being executed by the one or more processors,
> wherein the operations comprise:
>
>> receiving, from a third UE, a DeModulation Reference Signal for a Physical Sidelink Control Channel (PSCCH DMRS);
>> receiving, from the third UE, the PSCCH;
>> receiving, from the third UE, a DeModulation Reference Signal for a Physical Sidelink Shared channel (PSSCH DMRS);
>> determining a non-preferred resource related to transmission of a second UE based on a measurement for at least one of the PSCCH DMRS and/or the PSSCH DMRS; and
>> transmitting, to the second UE, coordination information representing the non-preferred resource,
>> wherein the coordination information is transmitted via a Physical Sidelink Shared channel (PSSCH),
>> wherein one or more resources are determined based on Sidelink Control Information (SCI) related to the PSCCH, and
>> wherein the one or more resources are determined as the non-preferred resource based on i) a reference signal received power (RSRP) based on the measurement and ii) one or more RSRP thresholds.

13. A device controlling a first user equipment (UE) to determine a non-preferred resource in a wireless communication system, the device comprising:

> one or more processors; and
> one or more memories operably connected to the one or more processors,
> wherein the one or more memories are configured to store instructions performing operations based on being executed by the one or more processors,
> wherein the operations comprise:
>
>> receiving, from a third UE, a DeModulation Reference Signal for a Physical Sidelink Control Channel (PSCCH DMRS);
>> receiving, from the third UE, the PSCCH;
>> receiving, from the third UE, a DeModulation Reference Signal for a Physical Sidelink Shared channel (PSSCH DMRS);
>> determining a non-preferred resource related to transmission of a second UE based on a measurement for at least one of the PSCCH DMRS and/or the PSSCH DMRS; and
>> transmitting, to the second UE, coordination information representing the non-preferred resource,
>> wherein the coordination information is transmitted via a Physical Sidelink Shared channel (PSSCH),

wherein one or more resources are determined based on Sidelink Control Information (SCI) related to the PSCCH, and

wherein the one or more resources are determined as the non-preferred resource based on i) a reference signal received power (RSRP) based on the measurement and ii) one or more RSRP thresholds.

14. One or more non-transitory computer readable mediums storing one or more instructions,

wherein the one or more instructions perform operations based on being executed by one or more processors, wherein the operations comprise:

receiving, from a third UE, a DeModulation Reference Signal for a Physical Sidelink Control Channel (PSCCH DMRS);

receiving, from the third UE, the PSCCH;

receiving, from the third UE, a DeModulation Reference Signal for a Physical Sidelink Shared channel (PSSCH DMRS);

determining a non-preferred resource related to transmission of a second UE based on a measurement for at least one of the PSCCH DMRS and/or the PSSCH DMRS; and

transmitting, to the second UE, coordination information representing the non-preferred resource,

wherein the coordination information is transmitted via a Physical Sidelink Shared channel (PSSCH),

wherein one or more resources are determined based on Sidelink Control Information (SCI) related to the PSCCH, and

wherein the one or more resources are determined as the non-preferred resource based on i) a reference signal received power (RSRP) based on the measurement and ii) one or more RSRP thresholds.

15. A method of a second User Equipment (UE) for receiving coordination information in a wireless communication system, the method comprising:

receiving, from a first UE, the coordination information,

wherein the coordination information represents a non-preferred resource related to transmission of the second UE,

wherein the non-preferred resource is determined based on a measurement for at least one of a DeModulation Reference Signal for a Physical Sidelink Control Channel (PSCCH DMRS) and/or a DeModulation Reference Signal for a Physical Sidelink Shared channel (PSSCH DMRS),

wherein the PSCCH DMRS and the PSSCH DMRS are transmitted from a third UE to the first UE,

wherein one or more resources are determined based on Sidelink Control Information (SCI) related to the Physical Sidelink Control Channel (PSCCH), and

wherein the one or more resources are determined as the non-preferred resource based on i) a reference signal received power (RSRP) based on the measurement and ii) one or more RSRP thresholds.

16. The method of claim 15, wherein the coordination information is received via a Physical Sidelink Shared channel (PSSCH).

17. The method of claim 16, wherein the coordination information is based on a second stage SCI or a Medium Access Control-Control Element (MAC-CE).

18. A second user equipment (UE) receiving coordination information in a wireless communication system, the second UE comprising:

one or more transceivers;

one or more processors configured to control the one or more transceivers; and

one or more memories operably connected to the one or more processors,

wherein the one or more memories are configured to store instructions performing operations based on being executed by the one or more processors,

wherein the operations comprise:

receiving, from a first UE, the coordination information,

wherein the coordination information represents a non-preferred resource related to transmission of the second UE,

wherein the non-preferred resource is determined based on a measurement for at least one of a DeModulation Reference Signal for a Physical Sidelink Control Channel (PSCCH DMRS) and/or a DeModulation Reference Signal for a Physical Sidelink Shared channel (PSSCH DMRS),

wherein the PSCCH DMRS and the PSSCH DMRS are transmitted from a third UE to the first UE,

wherein one or more resources are determined based on Sidelink Control Information (SCI) related to the Physical Sidelink Control Channel (PSCCH), and

wherein the one or more resources are determined as the non-preferred resource based on i) a reference signal received power (RSRP) based on the measurement and ii) one or more RSRP thresholds.

【FIG. 1】

【FIG. 2】

| One Frame (10ms) |
|---|

| Half Frame (5ms) | Half Frame (5ms) |
|---|---|

| subFrame 0 (1ms) | subFrame 4 (1ms) | subFrame 5 (1ms) | subFrame 9 (1ms) |
|---|---|---|---|

subframe (1ms)

15KHz

| Slot 0 (14symbols) |
|---|

1ms

30KHz

| Slot 0 (14symbols) | Slot 1 |
|---|---|

500μs

60KHz

| Slot 0 (14symbols) | Slot 1 | Slot 2 | Slot 3 |
|---|---|---|---|

250μs

120KHz

| Slot 0 (14symbols) | Slot 1 | Slot 2 | Slot 3 | Slot 4 | Slot 5 | Slot 6 | Slot 7 |
|---|---|---|---|---|---|---|---|

125μs

【FIG. 3】

Resource Grid

A carrier
(up to 3300 subcarriers, i.e., 275 RBs)

A BWP

1RB=12 subcarriers

1 RE

1 subcarrier

1 symbol

l=0 · · ·

k=0

【FIG. 4】

BS (e. g. eNB or gNB)

UE 1 ⟷ UE 2

【FIG. 5】

Frequency

| Unit #(N_F−1) | Unit #(2N_F−1) | | Unit #(N_F*N_T−1) | Unit #(N_F−1) |

| Unit #1 | Unit #(N_F+1) | | Unit #(N_F*N_T−N_F+1) | Unit #1 |
| Unit #0 | Unit #N_F | | Unit #(N_F*N_T−N_F) | Unit #0 |

Time

D2D signal transmission from a UE allocated with unit#0

D2D signal transmission from a UE allocated with unit#0

【FIG. 6】

(a)

(b)

【FIG. 7】

● : Transmitting UE
⊘ : Receiving UE

(a)  (b)  (c)

【FIG. 8】

【FIG. 9】

PRB N3

$N_{BWP,2}^{size}$

PRB 1
PRB 0

PRB N2

$N_{BWP,1}^{size}$

PRB 1
PRB 0

PRB N1

$N_{BWP,0}^{size}$

PRB 1
PRB 0

$N_{BWP,0}^{start}$

CRB 0

$N_{BWP,1}^{start}$

$N_{BWP,2}^{start}$

Carrier
Bandwidth

Frequency

Time

PRB 0 (Point A) in
reference resource block

【FIG. 10】

【FIG. 11】

: PSCCH

: PSSCH

Frequency

Time

【FIG. 12】

UE-A

UE-B

S1200

Assistance Information

【FIG. 13】

```
            ┌─────────┐
            │  Start  │
            └────┬────┘
                 │
                 ▼
   ┌───────────────────────────┐
   │    Receive PSCCH DMRS      │────S1310
   └─────────────┬─────────────┘
                 │
                 ▼
   ┌───────────────────────────┐
   │       Receive PSCCH        │────S1320
   └─────────────┬─────────────┘
                 │
                 ▼
   ┌───────────────────────────┐
   │    Receive PSSCH DMRS      │────S1330
   └─────────────┬─────────────┘
                 │
                 ▼
   ┌───────────────────────────┐
   │ Determine non-preferred resource │────S1340
   └─────────────┬─────────────┘
                 │
                 ▼
            ┌─────────┐
            │   End   │
            └─────────┘
```

【FIG. 14】

```
            ┌─────────┐
            │  Start  │
            └────┬────┘
                 │
                 ▼
   ┌───────────────────────────────────┐
   │   Receive coordination information │────S1410
   └─────────────────┬─────────────────┘
                     │
                     ▼
                ┌─────────┐
                │   End   │
                └─────────┘
```

【FIG. 15】

【FIG. 16】

【FIG. 17】

1000(102/106, 202/206)

【FIG. 18】

Device(100, 200)

Communication unit(110)
(e.g., 5G communication unit)

Communication circuit(112)
(e.g., processor(s),memory(s))

Transceiver(s)(114)
(e.g., RF unit(s),antenna(s))

Control unit(120)
(e.g., processor(s))

Memory unit(130)
(e.g., RAM, storage)

Additional components(140)
(e.g., power unit/battery,
I/O unit,driving unit,
computing unit)

【FIG. 19】

【FIG. 20】

| Car or autonomous vehicle(100) |
| --- |
| Communication unit(110) |
| Control unit(120) |
| Memory unit(130) |
| Driving unit(140a) |
| Power supply unit(140b) |
| Sensor unit(140c) |
| Autonomous driving unit (140d) |

108

208

| Device (100, 200) |
| --- |
| Communication unit(210) |
| Control unit(220) |
| Memory unit(230) |
| Driving unit(140a) |
| Power supply unit(140b) |
| Sensor unit(140c) |
| Autonomous driving unit (140d) |

**EP 4 336 922 A1**

<table>
<tr><td colspan="2" style="text-align:center"><strong>INTERNATIONAL SEARCH REPORT</strong></td><td>International application No.<br><br><strong>PCT/KR2022/006420</strong></td></tr>
</table>

**A.    CLASSIFICATION OF SUBJECT MATTER**

**H04W 72/02**(2009.01)i; **H04W 72/04**(2009.01)i; **H04W 72/08**(2009.01)i; **H04W 72/12**(2009.01)i; **H04L 1/18**(2006.01)i; **H04W 4/40**(2018.01)i; **H04W 92/18**(2009.01)i

According to International Patent Classification (IPC) or to both national classification and IPC

**B.    FIELDS SEARCHED**

Minimum documentation searched (classification system followed by classification symbols)

H04W 72/02(2009.01); H04L 5/00(2006.01); H04W 4/40(2018.01); H04W 72/04(2009.01); H04W 76/14(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PSCCH/PSSCH DMRS, SCI, RSRP, 조정정보(coordination information), 비선호 자원(non-preferred resource)

**C.    DOCUMENTS CONSIDERED TO BE RELEVANT**

| Category* | Citation of document, with indication, where appropriate, of the relevant passages | Relevant to claim No. |
|---|---|---|
| Y | LG ELECTRONICS. Discussion on feasibility and benefits for mode 2 enhancements. R1-2101786, 3GPP TSG RAN WG1 Meeting #104-e, e-Meeting. 26 January 2021.<br>See pages 4-25; and figure 2. | 1-18 |
| Y | CONVIDA WIRELESS. On Resource Allocation for Power Saving in NR Sidelink. R1-2103416, 3GPP TSG RAN WG1 Meeting #104b-e, e-Meeting. 07 April 2021.<br>See section 2. | 1-18 |
| Y | INTEL CORPORATION. Outcome and TPs for discussion [104b-e-NR-5G_V2X-03]. R1-2104084, 3GPP TSG RAN WG1 #104-bis-e, e-Meeting. 21 April 2021.<br>See pages 2-3 and 10. | 2-8 |
| A | US 2021-0029761 A1 (LG ELECTRONICS INC.) 28 January 2021 (2021-01-28)<br>See paragraphs [0328]-[0349]; and figure 19. | 1-18 |
| A | US 2021-0050979 A1 (HUI, Bing et al.) 18 February 2021 (2021-02-18)<br>See paragraph [0255]; and figure 35. | 1-18 |

☐ Further documents are listed in the continuation of Box C.    ☑ See patent family annex.

| | | |
|---|---|---|
| * | Special categories of cited documents: | "T"    later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X"    document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"    document member of the same patent family |

| Date of the actual completion of the international search | Date of mailing of the international search report |
|---|---|
| **12 August 2022** | **12 August 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2022/006420**

| Patent document cited in search report | | | Publication date (day/month/year) | Patent family member(s) | | | Publication date (day/month/year) |
|---|---|---|---|---|---|---|---|
| US | 2021-0029761 | A1 | 28 January 2021 | WO | 2019-240544 | A1 | 19 December 2019 |
| US | 2021-0050979 | A1 | 18 February 2021 | None | | | |

Form PCT/ISA/210 (patent family annex) (July 2019)

**REFERENCES CITED IN THE DESCRIPTION**

**Non-patent literature cited in the description**

- Physical channels and modulation. *3GPP TS 36.211*
- Physical channels and modulation. *3GPP TS 38.211*
- Multiplexing and channel coding. *3GPP TS 36.212*
- Multiplexing and channel coding. *3GPP TS 38.212*
- Physical layer procedures. *3GPP TS 36.213*
- Physical layer procedures for control. *3GPP TS 38.213*
- Physical layer; Measurements. *3GPP TS 36.214*
- Physical layer procedures for data. *3GPP TS 38.214*
- Overall description. *3GPP TS 36.300*
- User Equipment (UE) procedures in idle mode. *3GPP TS 36.304*
- Physical layer measurements. *3GPP TS 38.215*
- Layer 2 - Measurements. *3GPP TS 36.314*
- Overall description. *3GPP TS 38.300*
- Medium Access Control (MAC) protocol. *3GPP TS 36.321*
- User Equipment (UE) procedures in idle mode and in RRC inactive state. *3GPP TS 38.304*
- Radio Link Control (RLC) protocol. *3GPP TS 36.322*
- Medium Access Control. *3GPP TS 38.321*
- Packet Data Convergence Protocol (PDCP). *3GPP TS 36.323*
- Radio Link Control (RLC) protocol. *3GPP TS 38.322*
- Radio Resource Control (RRC) protocol. *3GPP TS 36.331*
- Packet Data Convergence Protocol (PDCP). *3GPP TS 38.323*
- Radio Resource Control (RRC) protocol. *3GPP TS 38.331*
- Service Data Adaptation Protocol (SDAP). *3GPP TS 37.324*
- Multi-connectivity; Overall description. *3GPP TS 37.340*